# EUROPEAN PATENT APPLICATION

(11) **EP 0 827 354 A2**
(43) Date of publication of application: **04.03.1998**
(21) Application number: 97104782.4
(22) Date of filing: 20.03.1997
(51) Int. Cl.: H04Q 7/38, H04Q 7/22

(54) **System and method of establishing call in mobile communications**

(30) Priority: 30.08.1996 JP 231013/96
(71) Applicant: FUJITSU LIMITED, Kawasaki-shi, Kanagawa 211 (JP)
(72) Inventor: Yamamoto, Osamu, Fujitsu Chugoku Com. Syst. Ltd., Naka-ku, Hiroshima 730 (JP); Harada, Masakazu, Fujitsu Chugoku Com. Syst. Ltd., Naka-ku, Hiroshima 730 (JP); Aoki, Mie, Fujitsu Chugoku Com. Syst. Ltd., Naka-ku, Hiroshima 730 (JP)
(74) Representative: Ritter und Edler von Fischern, Bernhard, Dipl.-Ing.

(57) **Abstract**

When a mobile switching center receives a request to connect a call to a mobile station, it calls the mobile station in a search-for-mobile-station service procedure using an international mobile station identity of the mobile station. The connection request is stored on a call number retrieval table using the international mobile station identity of the mobile station as a key. If the mobile station sends a paging response using a temporary mobile station identity in response to the call, the mobile switching center activates a call control program. A call control process (the call control program being in a running state) inquires the mobile station of the international mobile station identity. When the mobile switching center receives the international mobile station identity from the mobile station as a response to the inquiry, it searches the call number retrieval table using the received international mobile station identity as a key, and links the request to connect the call to the mobile station to the paging response from the mobile station.

## Description

### Background of the Invention

### Field of the Invention

The present invention relates to a system of establishing a call in a mobile communications system, and more specifically to a system of establishing a call in a mobile communications system designed to assign identification numbers of a plurality of number systems to each mobile station.

### Description of the Related Art

Mobile communications systems have intensively become popular all over the world. Various standards are suggested and adopted in respective regions for mobile communications systems. One of the most popular mobile communications systems is a global system for mobile communications (GSM), which is a standard system in Europe and some other countries. The GSM is described below.

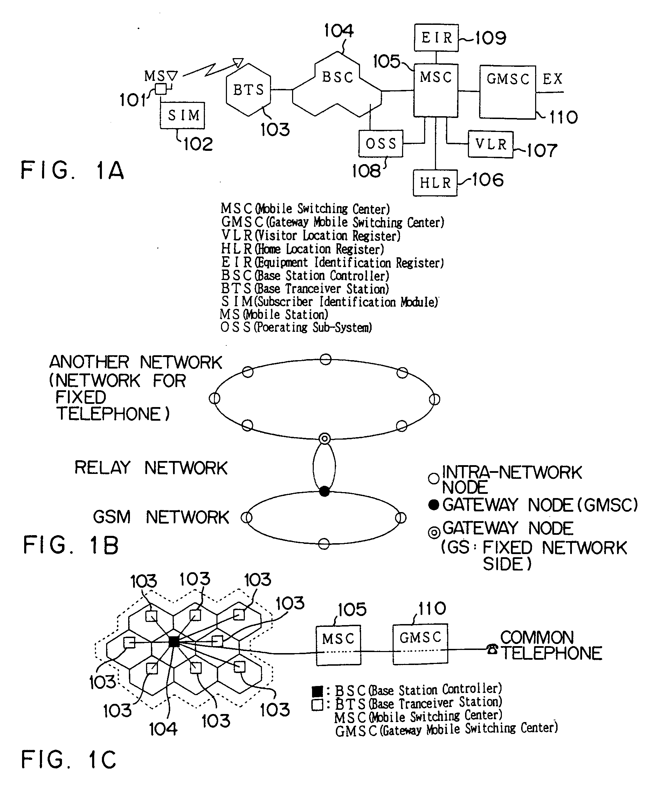

FIG. 1A shows the configuration of the GSM. A mobile station 101 is a communications terminal unit such as, for example, a telephone, portable computer, etc. An international mobil station identity (IMSI) is uniquely assigned to each mobile station 101. A subscriber identification module (SIM) 102 is used as necessary, and an ISDN number is assigned as a personal number of a user of the subscriber identification module.

A base transceiver station (BTS) 103 is provided at the center of one wireless communications zone (cell), and transmits and receives wireless data to and from the mobile station 101. A base station controller (BSC) 104 is provided for each service area, and is connected to a plurality of base transceiver stations 103. The base station controller 104 manages a wireless channel, manages a hand-over, controls a monitoring process, and manages the base transceiver station 103 and mobile station 101 independent of a mobile switching center 105.

The mobile switching center (MSC) 105 is a switching center for mobile stations and connected to a home location register (HLR) 106 and a visitor location register (VLR) 107. The mobile switching center 105 switches and establishes a call relating to a call-in to the mobile station 101 or a call-out from the mobile station 101, recognizes the position of the mobile station 101, and performs an accounting process using the home location register 106 and the visitor location register 107.

The home location register 106 stores, for example, subscriber information and the information about the additive service determined by a contract. The home location register 106 stores for each communications common carrier the information about a subscriber who has contracted with the carrier.

The visitor location register 107 stores the information about the mobile station in the area managed by the mobile switching center 105. Especially, the information identifying each mobile station is managed corresponding to the information indicating its position. Furthermore, when a mobile station contracting with another communications common carrier enters the area managed by the mobile switching center 105 of the present common carrier (roaming), the visitor location register 107 retrieves the information about the mobile station from the subscriber information memory of the other communications common carrier, and stores the information.

An operating sub-system (OSS) 108 maintains the base station controller 104 and the mobile switching center 105, alters the present station, checks the traffic, manages the station data, manages the communication resources, etc. An equipment identification register (EIR) 109 stores an international mobile equipment identifier (IMEA).

A gateway mobile switching center (GMSC) 110 connects the GSM network with another network. For example, it provides an interface for connecting the GSM network to a network for accommodating a normal fixed telephone (hard-wired telephone) as shown in FIG. 1B.

FIG. 1C shows an example of connecting a common telephone to the mobile station 101 using the GSM with the above described configuration. In this case, the ISDN number of the mobile station 101 is input from the common telephone. The ISDN number is converted into an international mobile station ID (IMSI) by the gateway mobile switching center 110, and is transmitted to the mobile switching center 105. The international mobile station ID (IMSI) is an identification number fixedly assigned to each mobile station in the GSM, and is a number expressed by 15 digits at maximum.

A mobile station is normally called using an identification number referred to as a "temporary mobile station identity". A temporary mobile station identity (TMSI) is a local identification number and is assigned to each mobile station for each communications common carrier. Each communications common carrier assigns a temporary mobile station identity (TMSI) to a mobile station under contract with the communications common carrier, and assigns a temporary mobile station identity (TMSI) to a roaming mobile station when the mobile station, which is a subscriber of another communications common carrier, roams in the service area of the present communications common carrier. The temporary mobile station identity (TMSI) is normally represented by 8 digits and encrypted or security.

The mobile switching center 105 normally recognizes the position of each mobile station. That is, when the mobile switching center 105 receives a request to establish a call to the mobile station 101 (a call-in to be received by the mobile station 101), it recognizes which base transceiver station 103 should be used in calling the mobile station 101. Therefore, the mobile switching center 105 transmits a calling instruction to only the base transceiver station 103, in the area of which the mobile station 101 is located.

The base transceiver station 103 which has received the calling instruction calls the mobile station 101 by wireless using the temporary mobile station identity (TMSI). If the mobile station 101 answers the call, the calling common telephone is connected to the mobile station 101.

Thus, the GSM uses a recognition number (international mobile station identity (IMSI)) uniquely assigned in the world, and a local recognition number (temporary mobile station identity (TMSI)). Since the temporary mobile station identity (TMSI) is smaller in number of digits than the international mobile station identity (IMSI), it is easy to perform a process in each of the units from the mobile switching center 105 to the mobile station 101 by using the temporary mobile station identity (TMSI), thereby performing the processes at a higher speed. Furthermore, the security is guaranteed by the temporary mobile station identity (TMSI).

The position of the mobile station is stored in the visitor location register 107 as location area identification. The location area identification (LAI) contains nation identification information, communications common carrier identification information, and information identifying the base transceiver station 103. It is stored corresponding to the international mobile station identity (IMSI) and the temporary mobile station identity (TMSI) of each mobile station. The location area identification (LAI) is updated at any time when the mobile station moves.

However, the location area identification (LAI) of a mobile station is not always stored in the visitor location register 107. For example, if the system becomes inoperable in the visitor location register 107 and the visitor location register 107 is reactivated, then the international mobile station identity (IMSI), the temporary mobile station identity (TMSI), and the location area identification (LAI) are deleted.

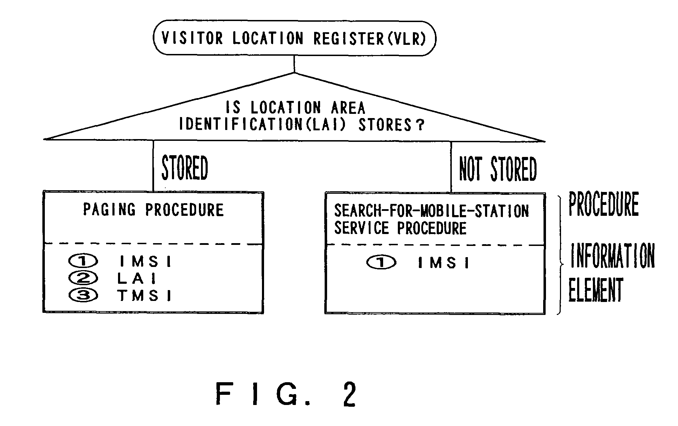

The calling procedures are different between the case where the location area identification (LAI) is stored in the visitor location register 107 and the case where the location area identification (LAI) is not stored in the visitor location register 107 as shown in FIG. 2. When the mobile switching center 105 receives a request for connection to the mobile station 101, it accesses the visitor location register 107 and checks whether or not the location area identification (LAI) of the mobile station 101 is stored. If it is stored, the mobile station 101 is called in the paging service procedure. If it is not stored, the mobile station 101 is called in the search-for-mobile-station service procedure.

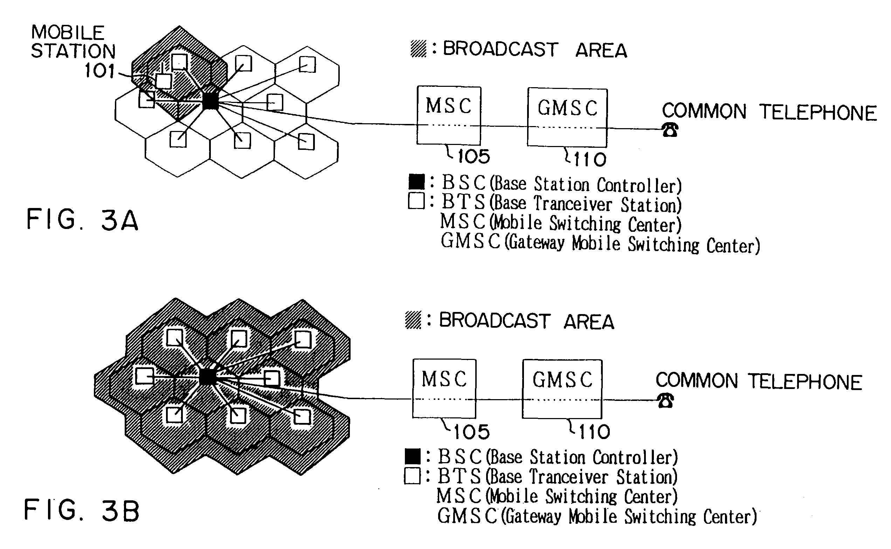

When the mobile switching center 105 retrieves the location area identification (LAI) from the visitor location register 107 in the paging procedure, it transmits a calling instruction to only the base transceiver station 103 specified by the location area identification (LAI) as shown in FIG. 3A. Then, the base transceiver station 103 calls the mobile station 101 in the area managed by the base transceiver station 103.

Since the mobile switching center 105 does not recognize where the mobile station 101 is located in the search-for-mobile-station service procedure, it transmits a calling instruction to all base transceiver stations 103 under control of the mobile switching center 105 as shown in FIG. 3B. That is, the paging procedure is performed in all areas managed by the mobile switching center 105. As a result, the mobile station 101 is called through any of the base transceiver stations 103.

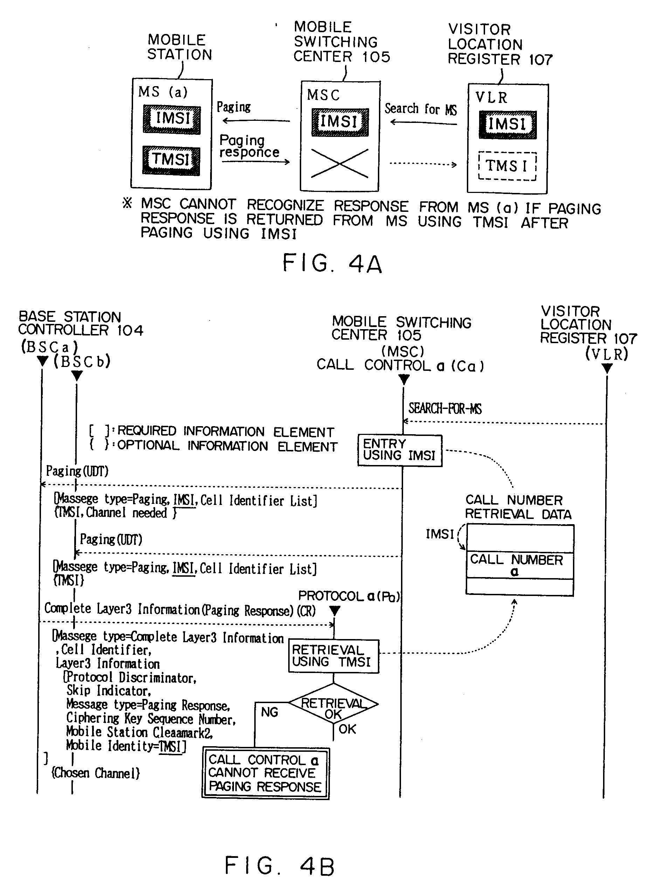

The search-for-mobile-station service procedure is followed when the location area identification (LAI) of the mobile station to be called is not stored in the visitor location register 107 as described above. However, when the location area identification (LAI) is not stored, the temporary mobile station identity (TMSI) of the mobile station may not be stored at a high probability. Therefore, a mobile station is called using the international mobile station identity (IMSI) in the search-for-mobile-station service procedure as shown in FIG. 4A.

Since each of the mobile stations is uniquely assigned the international mobile station identity (IMSI), the mobile station can answer the call released using the international mobile station identity (IMSI). However, the method of answering a call released using the international mobile station identity (IMSI) is not standardized by the GSM counsel. Therefore, at present, some mobile stations respond using the international mobile station identity (IMSI) and other mobile stations do using the temporary mobile station identity (TMSI), on receiving a call-in released using the international mobile station identity (IMSI).

The temporary mobile station identity (TMSI) is an identification number assigned by the mobile switching center 105 to each mobile station. If the temporary mobile station identity (TMSI) is assigned to each mobile station, the mobile station holds the number until a reassign instruction is received. Therefore, the temporary mobile station identity (TMSI) assigned before remains in the mobile station even if the temporary mobile station identity (TMSI) in the visitor location register 107 is deleted by the trouble in the visitor location register 107 or something.

If the mobile station answers using the temporary mobile station identity (TMSI) in response to the call released using the international mobile station identity (IMSI), then the mobile switching center 105 cannot connect the calling terminal (source terminal) to the destination mobile station. This is explained below by referring to FIG. 4B.

The mobile switching center 105 activates a call control program a when it receives a request to establish a call from a source terminal to a mobile station as shown in FIG. 4B. A program being in a running state is hereinafter referred to as a process. If the visitor location register 107 stores the temporary mobile station identity (TMSI) of a destination mobile station and the mobile station is called using the temporary mobile station identity (TMSI), then the mobile switching center 105 manages the call control process a using the temporary mobile station identity (TMSI) as a key. The mobile station answers using the temporary mobile station identity (TMSI) in response to the call released using the temporary mobile station identity (TMSI). Therefore, the mobile switching center 105 receives an answer released using the temporary mobile station identity (TMSI) from the destination mobile station. In this case, the mobile switching center 105 can retrieve the call control process a if it searches for the process using the temporary mobile station identity (TMSI) received from the destination mobile station. That is, a request for connection to a mobile station can be linked to the response from the mobile station. Thus, the source terminal and the destination mobile station can be connected to each other.

If the visitor location register 107 does not store the temporary mobile station identity (TMSI) of a destination mobile station, and the mobile station is to be called using the international mobile station identity (IMSI), then the mobile switching center 105 manages the call control process a using the international mobile station identity (IMSI) as a key. In this state, if a response received from the destination mobile station is the one which uses the temporary mobile station identity (TMSI), then the mobile switching center 105 cannot link the response with the call control process a. That is, the source terminal and the destination mobile station cannot be connected to each other.

Conventionally, a source terminal may not be connected to a mobile station if the mobile station answers a call, which is released using the international mobile station identity (IMSI), using the temporary mobile station identity (TMSI).

The mobile switching center 105 relates a paging message (calling a mobile station) to a paging response using a mobile station ID (IMSI or TMSI) for the following reasons.

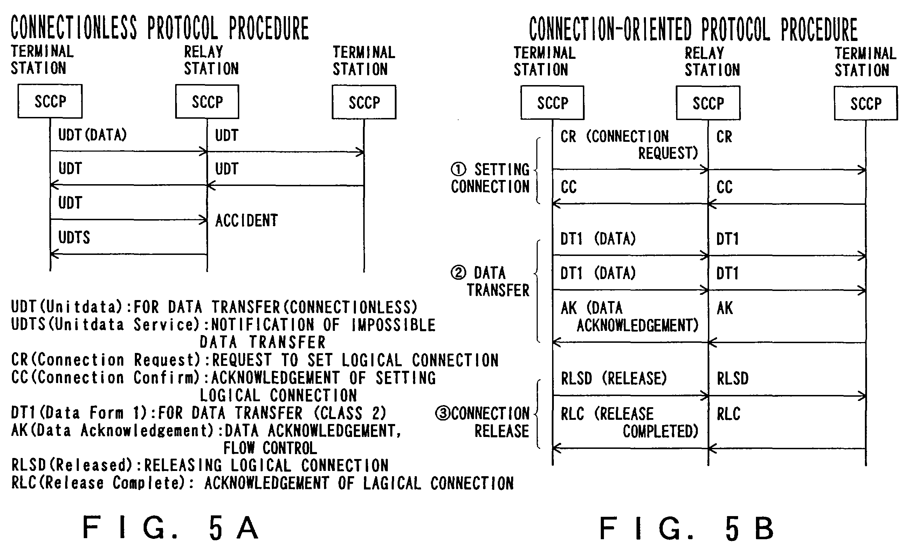

As shown in FIGs. 5A and 5B, the protocol procedure of the signal connection control unit (SCCP) includes a connectionless protocol procedure and a connection-oriented protocol procedure. Normally, a switching unit connects a call by the connection-oriented protocol procedure to manage a call using a source address and a destination address.

However, when a call is connected to a mobile station of the GSM system, a paging message is processed in the connectionless protocol procedure and a paging response is processed in the connection-oriented protocol procedure. That is, when the mobile station 101 is called through the mobile switching center 105, data is transferred in the connectionless format using the UDT message in the connectionless protocol procedure. On the other hand, when the mobile station 101 answers the paging message, it first requests to set a logical connection between the mobile station 101 and the mobile switching center 105 using a CR message, and then the mobile switching center 105 returns a CC message (confirming the setting of the logical connection) to the mobile station 101. Thus, the connection can be successfully established.

Accordingly, there are two calls when the call is connected to the mobile station. That is, one call exists between the source terminal and the mobile switching center 105, and the other call exists between the mobile switching center 105 and the mobile station 101. Therefore, these two calls should be linked to each other to connect the source terminal to the destination mobile station. The identification numbers (TMSI and IMSI) of the mobile station 101 are used to identify and manage these calls.

FIG. 4B shows an example of an entry using the IMSI in the call control process a and then managing the call (call number a) between the source terminal and the mobile switching center 105 using the international mobile station identity (IMSI) as a key. The TMSI is set as the "mobil identity" in the response message from the mobile station 101 (the response from the base station controller (BSCa) 104 in FIG. 4B). This indicates that the mobile station 101 answers using the temporary mobile station identity (TMSI). That is, the call between the mobile switching center 105 and the mobile station 101 is identified by the temporary mobile station identity (TMSI) of the mobile station 101.

The problem with the conventional technology occurs when the mobile station 101 answers the call, which has been released using the international mobile station identity (IMSI), using the temporary mobile station identity (TMSI). That is, in the above described case, the call between the source terminal and the mobile switching center 105 is managed using the international mobile station identity (IMSI), and the call between the mobile switching center 105 and the mobile station 101 is identified using the temporary mobile station identity (TMSI). Therefore, these two calls cannot be linked to each other, thereby failing to successfully connect the source terminal to the mobile station 101.

### Summary of the Invention

An object of the present invention is to correctly establish a call independent of the type of mobile station in the mobil communications. A more concrete object of the present invention is to provide a system of correctly connect a call to a mobile station in the GSM system even if the visitor location register does not store the positional information about the mobile station or the temporary mobile station identity.

The system of connecting a call according to the present invention is based on the mobile communications system in which the identification numbers of the first and second number systems are assigned to each mobile station. The mobile communications system can be, for example, a GSM system. In this case, the identification numbers according to the first and second number systems are the international mobile station identity (IMSI) and the temporary mobile station identity (TMSI), respectively. The call connection system according to the present invention includes the following units.

A calling unit calls a destination mobile station using an identification number of the first number system assigned to the destination mobile station. An inquiry unit inquires the destination mobile station of the identification number of the first number system when a response using an identification number of the second number system is received from the destination mobile station. A receiving unit receives an identification number transferred from the destination mobile station in response to the inquiry. A connecting unit connects a source terminal, which is a calling terminal, to the destination mobile station when the identification number of the first number system used by the above described calling unit matches the identification number received by the receiving unit.

### Brief Description of the Drawings

FIGs. 1A, 1B, and 1C respectively show the configuration of the system, the connection between the GSM network and another network, and a call from a common telephone to a GSM mobile station;
FIG. 2 shows the method of determining a mobile station calling procedure;
FIGs. 3A and 3B respectively show the paging procedure and the search-for-mobile-station service procedure;
FIGs. 4A and 4B respectively show the operation performed when the paging with the international mobile station identity is answered using the temporary mobile station identity, and the sequence of the operation;
FIGs. 5A and 5B respectively show the connectionless protocol procedure and connection-oriented protocol procedure;
FIG. 6 shows the principle of the present invention.
FIG. 7 shows the general operation (1) of the present embodiment;
FIG. 8 shows the general operation (2) of the present embodiment;
FIG. 9 shows the sequence of the operations from receiving a request to connect a call to a mobile station to actually calling the mobile station;
FIG. 10 shows subscriber data stored in a home location register;
FIG. 11 shows subscriber data stored in a visitor location register;
FIG. 12 shows the sequence (1) of the call control system;
FIG. 13 shows the sequence (2) of the call control system;
FIG. 14 shows the process performed in the visitor location register;
FIG. 15 shows the sequence of the case where a mobile station does not correctly answer the inquiry with the international mobile station identity (IMSI) in the call control system;
FIG. 16 shows the sequence of the case where a mobile switching center cannot receive the response to the inquiry of the international mobile station identity (IMSI) from a mobile station in the call control system;
FIG. 17 shows the sequence (1) of the protocol process system;
FIG. 18 shows the sequence (2) of the protocol process system;
FIG. 19 shows the sequence of the case where a mobile station does not correctly answer the inquiry with the international mobile station identity (IMSI) in the protocol process system;
FIG. 20 shows the sequence of the case where a mobile switching center cannot receive the response to the inquiry of the international mobile station identity (IMSI) from a mobile station in the protocol process system;
FIG. 21 is a flowchart showing the method of autonomously regenerating the temporary mobile station identity (TMSI) by the visitor location register;
FIG. 22 shows the sequence (1) of the case where the process of regenerating the temporary mobile station identity (TMSI) by the visitor location register is applied to the call control system;
FIG. 23 shows the sequence (2) of the case where the process of regenerating the temporary mobile station identity (TMSI) by the visitor location register is applied to the call control system;
FIG. 24 shows the sequence (3) of the case where the process of regenerating the temporary mobile station identity (TMSI) by the visitor location register is applied to the call control system;
FIG. 25 shows the sequence (4) of the case where the process of regenerating the temporary mobile station identity (TMSI) by the visitor location register is applied to the call control system;
FIG. 26 shows the sequence (1) of the case where the process of regenerating the temporary mobile station identity (TMSI) by the visitor location register is applied to the protocol process system
FIG. 27 shows the sequence (2) of the case where the process of regenerating the temporary mobile station identity (TMSI) by the visitor location register is applied to the protocol process system
FIG. 28 shows the sequence (3) of the case where the process of regenerating the temporary mobile station identity (TMSI) by the visitor location register is applied to the protocol process system
FIG. 29 shows the sequence (4) of the case where the process of regenerating the temporary mobile station identity (TMSI) by the visitor location register is applied to the protocol process system.

### Detailed Description of the Invention

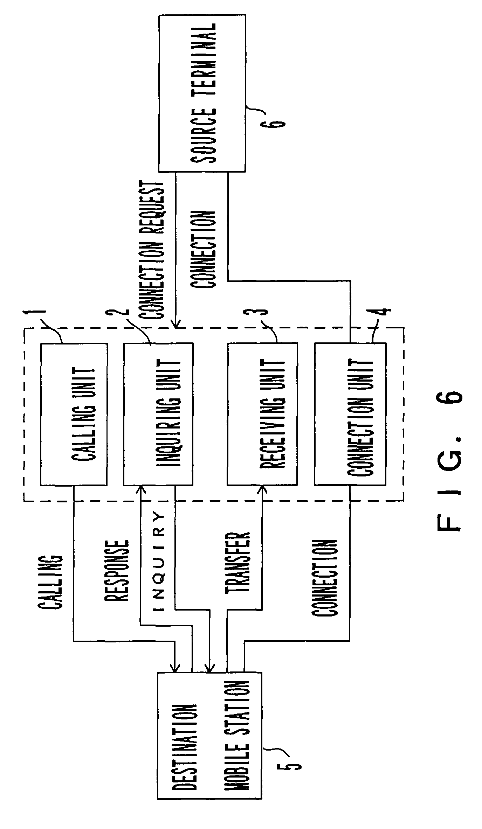

The principle of the present invention is described below by referring to FIG. 6. The call connection system in the mobile communications system according to the present invention is based on the mobile communications system for assigning the identification numbers in the first and second number systems to each mobile station, and includes the following units.

Described below is the operations performed when a source terminal 6 issues a connection request to a mobile station 5. When a calling unit 1 receives the connection request, it calls the mobile station 5 using the identification number in the first number system assigned to the mobile station 5. An inquiring Unit 2 inquires the mobile station 5 of the identification number in the first number system when the inquiring unit 2 receives a response from the mobile station 5 transmitted using the identification number in the second number system.

In response to the inquiry from the inquiring unit 2, a receiving unit 3 receives the identification number transferred from the destination mobile station 5. A connecting unit 4 connects the source terminal 6 to the mobile station 5 when the identification number in the first number system used by the calling unit 1 matches the identification number received by the receiving unit 3.

With the above described configuration, a call can be successfully established when it is released from the source terminal 6 to the mobile station 5 even if the mobile station 5 is a terminal unit which returns an answer using the identification number in the second number system in response to a call released using the identification number in the first number system.

Another aspect of the present invention is the system of regenerating an identification number in the mobile communications system in which the identification numbers in the first and second number systems are assigned to each mobile station, and includes the following unit.

A storage unit stores the identification number in the first number system corresponding to the identification number in the second number system for each mobile station. A calling unit retrieves the identification number in the first number system from the storage unit, and calls a mobile station using the retrieved identification number. An assigning unit receives a response from the mobile station called by the calling unit, and assigns a new identification number in the second number system to the mobile station. An updating unit stores in the storage unit the identification number in the second number system assigned by the assigning unit to the mobile station corresponding to the identification number in the first number system retrieved by the calling unit.

With the above described configuration, an identification number in the second number system can be autonomously regenerated even if it has been lost from the storage unit by accident.

The concrete embodiment of the present invention is described by referring to the attached drawings. Described below is the GSM system adopted in Europe as a standard system of the mobile communications. FIG. 1A shows the configuration of the system.

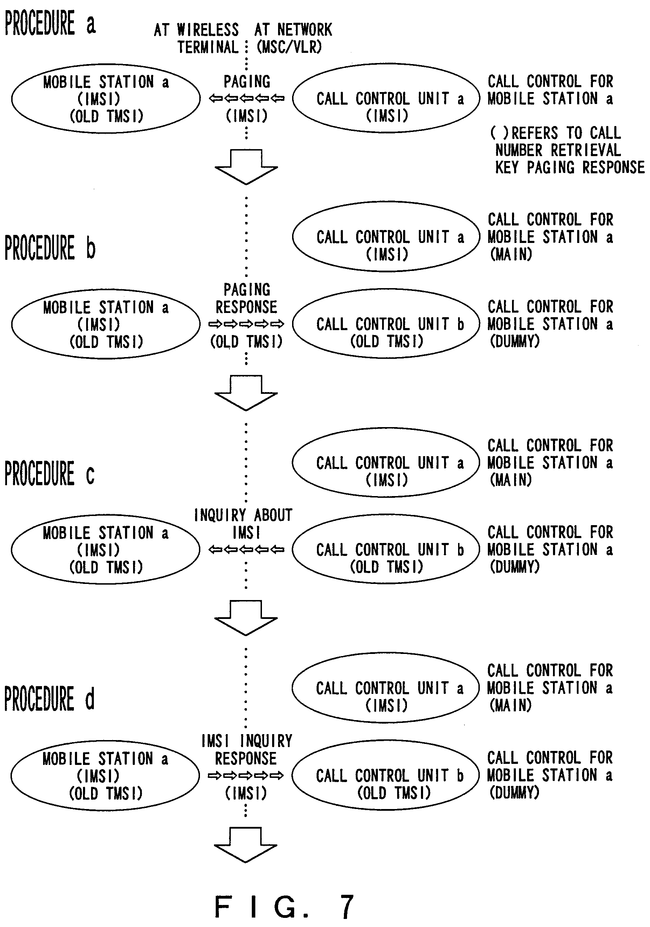

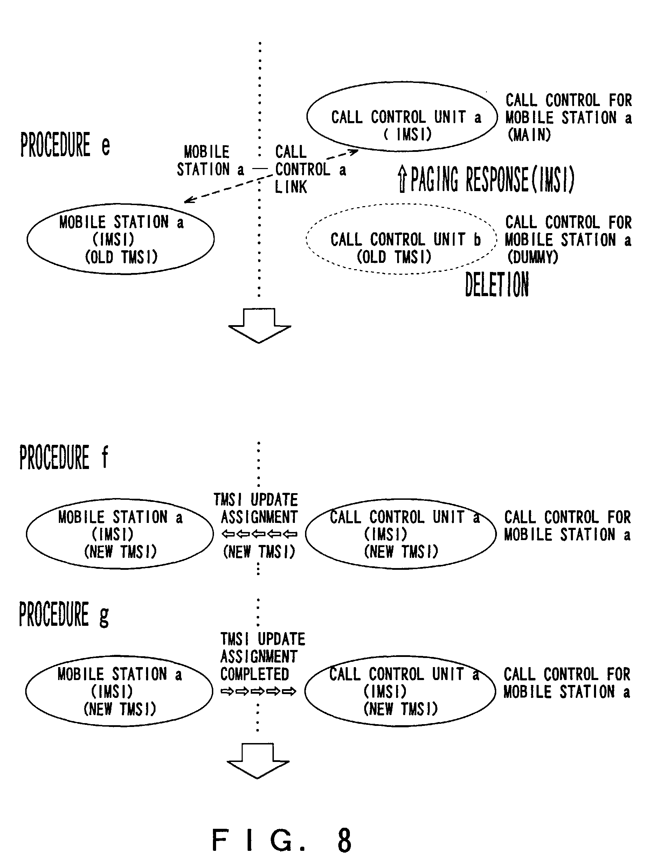

FIGs. 7 and 8 show the general operation of the present embodiment. FIGs. 7 and 8 illustrate the procedure followed if the location area identification (LAI) and the temporary mobile station identity (TMSI) of mobile station **a** are not stored in the visitor location register 107 when the mobile switching center 105 receives a request to establish a call to mobile station **a**.

Procedure a: When the mobile switching center 105 receives a request to establish a call to mobile station **a**, it activates a call control unit. The call control unit is referred to as call control unit **a**. The mobile switching center 105 accesses the visitor location register 107 and searches for the location area identification (LAI) of mobile station **a**. Since the location area identification (LAI) of mobile station **a** is not stored in the visitor location register 107, the mobile switching center 105 follows the search-for-mobile-station service procedure. That is, the mobile switching center 105 follows the paging procedure using the international mobile station identity (IMSI) from all subordinate base transceiver stations 103 to mobile station **a**. At this time, the mobile switching center 105 manages the call control unit a using the international mobile station identity (IMSI) of mobile station **a**. That is, the mobile switching center 105 stores the identification number of call control unit **a** on the call number retrieval table using the international mobile station identity (IMSI) as a key so that call control unit **a** can be retrieved using the international mobile station identity (IMSI) as a key.

Mobile station **a** holds a uniquely assigned international mobile station identity (IMSI) and a temporary mobile station identity (TMSI) assigned by the mobile switching center 105. The temporary mobile station identity (TMSI) which was assigned before is also referred to as an 'old IMSI' in FIGs. 7 and 8.

Procedure b: Mobile station **a** responds to the paging from the mobile switching center 105. If mobile station **a** responds using the international mobile station identity (IMSI) to the paging released using the international mobile station identity (IMSI), then the mobile switching center 105 can retrieve call control unit **a** by searching the call number retrieval table using as a key the international mobile station identity (IMSI) received as a response from mobile station **a**. That is, call control unit **a** activated by a request to establish a call to mobile station **a** is linked to the response from mobile station **a**. As a result, the source terminal is connected to mobile station **a**.

However, if mobile station **a** responds using the temporary mobile station identity (TMSI) to the paging released using the international mobile station identity (IMSI), then the mobile switching center 105 cannot retrieve call control unit **a** by searching the call number retrieval table using the temporary mobile station identity (TMSI) as a key. In this case, the mobile switching center 105 generates call control unit **b** corresponding to the paging response from mobile station **a**. Call control unit **b** holds the information received in response to the paging response from mobile station **a**.

Procedure c: Call control unit **b** inquires mobile station **a** of the international mobile station identity (IMSI).

Procedure d: When mobile station **a** receives the inquiry in procedure c, it transfers to the mobile switching center 105 its own international mobile station identity (IMSI) as a response to the inquiry.

Procedure e: When call control unit **b** receives the international mobile station identity (IMSI) from call control unit **a**, call control unit **a** is retrieved from the call number retrieval table using the international mobile station identity (IMSI) as a key. Call control unit **b** passes to call control unit **a** the information received from mobile station **a** as a paging response. Thus, the paging response from mobile station **a** is received by call control unit **a**, and mobile station **a** is linked to call control unit **a**. As a result, the source terminal is connected to mobile station **a**. Call control unit **b** is released (deleted) if the link is established between mobile station **a** and call control unit **a**.

Procedure f: Call control unit **a** generates a new temporary mobile station identity (TMSI) and provides it for mobile station **a**. This newly generated temporary mobile station identity (TMSI) is expressed as a 'new TMSI' in FIG. 8.

Procedure g: Upon receipt of the notification in procedure f, mobile station **a** updates the temporary mobile station identity (TMSI) from the old TMSI to the new TMSI. Then, mobile station **a** notifies the mobile switching center 105 that the update assignment has been completed.

Thus, a call can be connected to a mobile station even if a destination mobile station is designed to respond using the temporary mobile station identity (TMSI) to a paging released using the international mobile station identity (IMSI). Unless a network holds the temporary mobile station identity (TMSI) of the destination mobile station, the network generates and holds the temporary mobile station identity (TMSI) of the mobile station and assigns the generated temporary mobile station identity (TMSI) to the mobile station. Therefore, the mobile station can be called using the temporary mobile station identity (TMSI).

Described below is the operations performed when a request to establish a call to a mobile station is issued. The explanation relates to the case where the mobile station 101 is called from a common telephone as shown in FIG. 1.

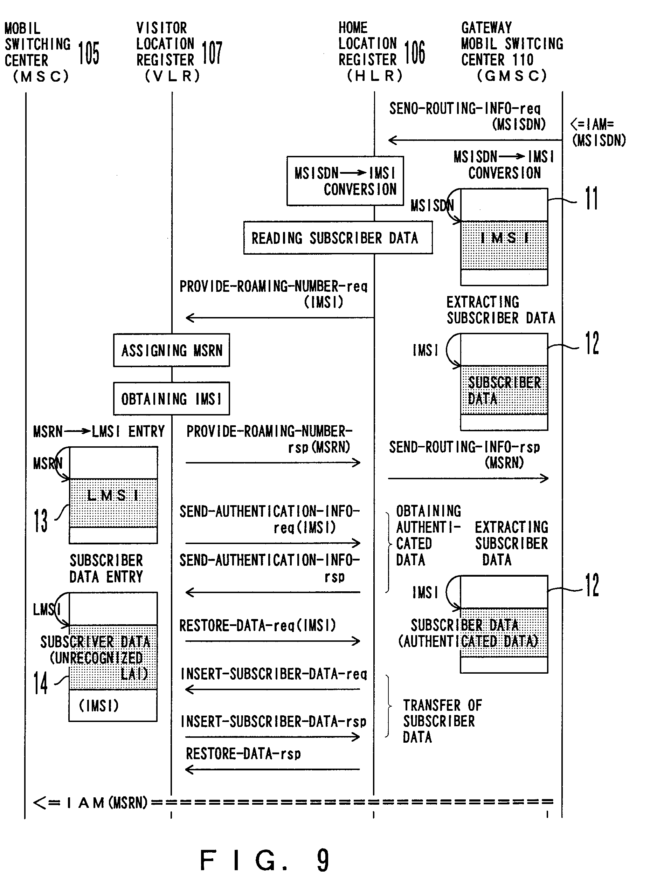

FIG. 9 shows the sequence of the operations from receiving a request to connect a call to the mobile station 101 to calling the mobile station 101. In the embodiment, the home location register (HLR) 106 and the visitor location register (VLR) 107 have the data processing functions. These registers 106 and 107 can be simple storage devices and similarly function at read and write instructions from the mobile switching center (MSC) 105.

A common telephone inputs the ISDN number (MSISDN) of the mobile station 101 as a request to call the mobile station 101. When the gateway mobile switching center (GMSC) 110 receives an IAM message (message requesting to establish a call), it transfers the SEND-ROUTING-INFO request message to the home location register 106 according to the ISDN number set in the IAM message.

When the home location register 106 receives the a SEND-ROUTING-INFO request message, it refers to a conversion table 11 and converts the ISDN number of the mobile station 101 to the international mobile station identity (IMSI). The conversion table 11 stores the ISDN number corresponding to the international mobile station identity (IMSI) for each mobile station at the contract with a communications common carrier.

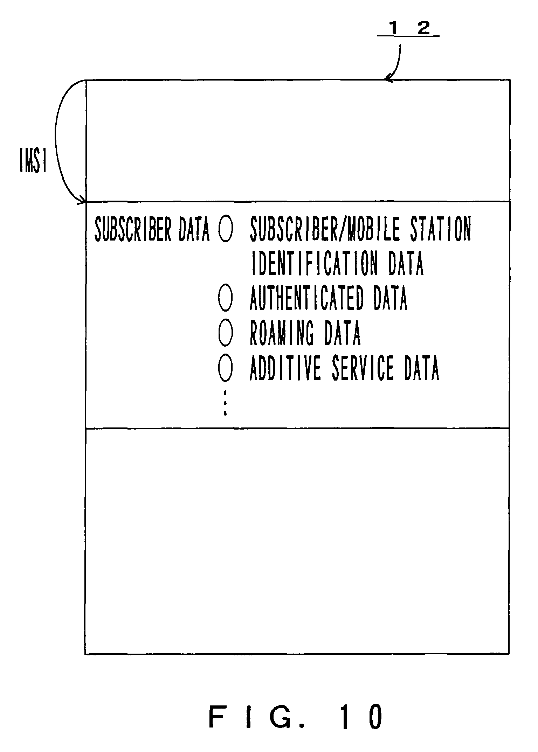

The home location register 106 comprises a subscriber data table 12. As shown in FIG. 10, the subscriber data table 12 stores the subscriber data about each mobile station using as a key the international mobile station identity (IMSI) of each mobile station. The home location register 106 retrieves the subscriber data of the mobile station 101 from the subscriber data table 12 using as a key the international mobile station identity (IMSI) of the mobile station 101, which is a destination mobile station. Then, the home location register 106 transfers a PROVIDE-ROAMING-NUMBER request message to the visitor location register 107. The international mobile station identity (IMSI) of the mobile station 101 is set in this message.

When the visitor location register 107 receives the PROVIDE-ROAMING-NUMBER request message, it assigns a mobile station roaming number (MSRN) to the international mobile station identity (IMSI) of the mobile station 101. A mobile station roaming number (MSRN) is an identification number for use in routing a call to a mobile station (request to connect a call to a mobile station). Using an entry table 13, the visitor location register 107 obtains a local mobile station ID (LMSI) from the mobile station roaming number (MSRN) of the mobile station 101. A local mobile station ID (LMSI) is an identification number assigned to a mobile station by the visitor location register 107, and is used in identifying each mobile station in the visitor location register 107. The local mobile station ID (LMSI) of each mobile station corresponds to the international mobile station identity (IMSI) in the visitor location register 107.

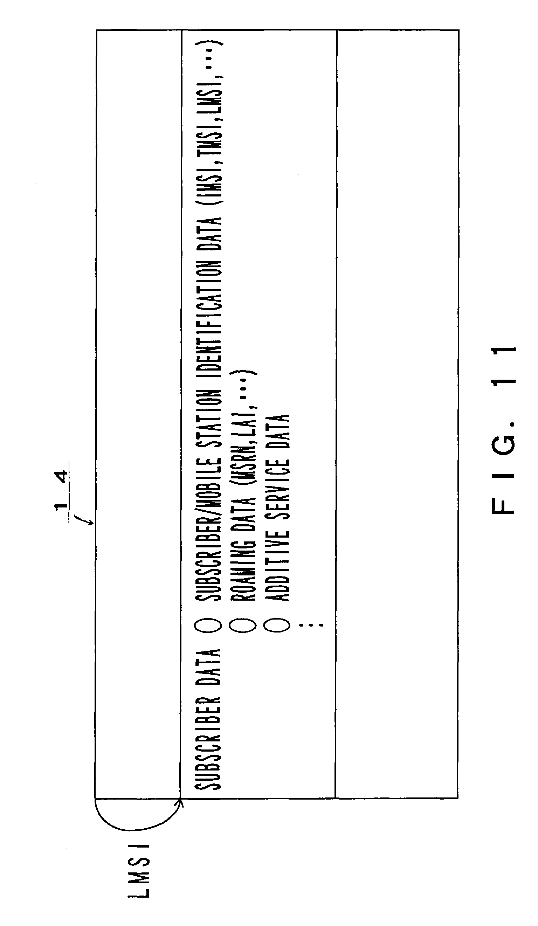

The visitor location register 107 comprises a subscriber data table 14. The subscriber data table 14 stores the subscriber data relating to each mobile station using the local mobile station ID (LMSI) of each mobile station as a key as shown in FIG. 11. The international mobile station identity (IMSI), temporary mobile station identity (TMSI), etc. are stored as subscriber/mobile-station identification data. The mobile station roaming number (MSRN), the location area identification (LAI), etc. are stored as roaming data. Among the data, the location area identification (LAI) is transferred from each mobile station, and indicates to the management area of which base transceiver station the mobile station belongs. Therefore, when the power source is provided for the visitor location register 107, the location area identification (LAI) of each mobile station is removed (not stored).

If the subscriber data table 14 does not store the subscriber data of the destination mobile station relating to the PROVIDE-ROAMING-NUMBER request message when the visitor location register 107 receives the message, the visitor location register 107 obtains the data from the home location register 106. In this case, the visitor location register 107 transfers a RESTORE-DATA request message to the home location register 106.

The visitor location register 107 retrieves the subscriber data of the mobile station 101 from the subscriber data table 14 using the local mobile station ID (LMSI) of the mobile station 101 as a key. Then, the visitor location register 107 notifies the gateway mobile switching center 110 of the mobile station roaming number (MSRN) assigned to the mobile station 101. The gateway mobile switching center 110 transfers the IAM message, in which the mobile station roaming number (MSRN) of the mobile station 101 is set, to the mobile switching center 105.

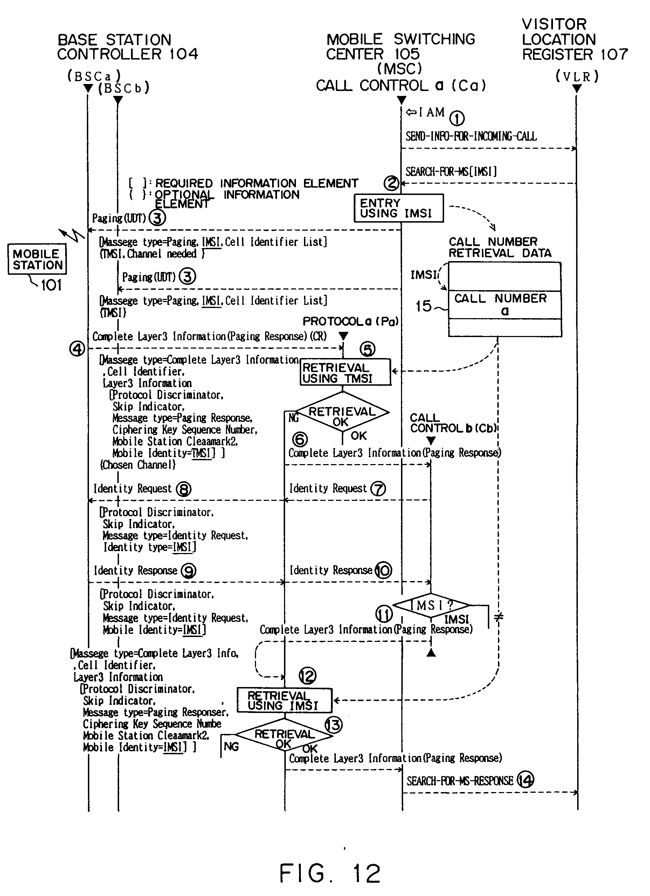

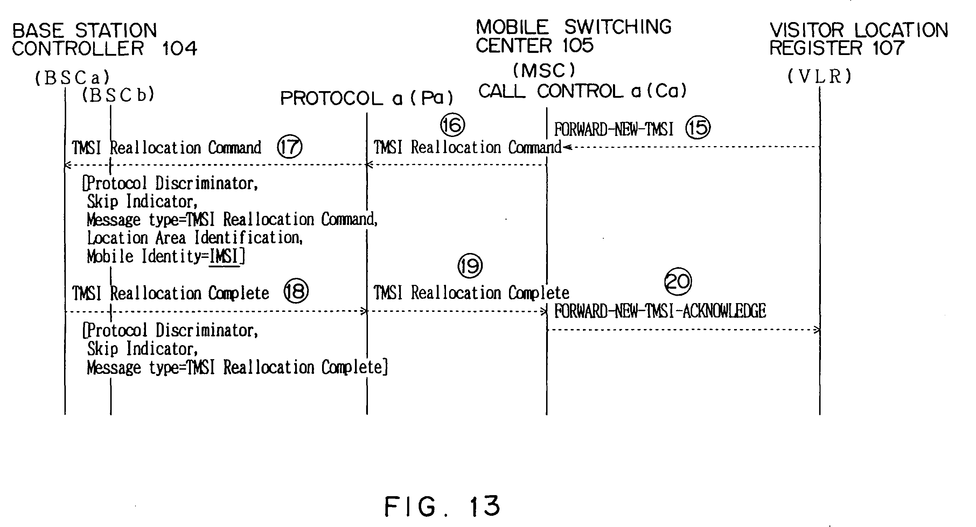

FIGs. 12 and 13 show the sequence of the operations after the mobile switching center 105 has received a call setting message (IAM message). That is, FIGs. 12 and 13 show the sequence of the operations performed after the process of requesting to connect a call to the mobile station 101 shown in FIG. 9. In this example, the visitor location register 107 does not store the location area identification (LAI) of the mobile station 101. The visitor location register 107 does not store the location area identification (LAI) of a mobile station when, for example, an electric power is provided for the visitor location register 107 after the system fails in the visitor location register 107.

Procedure 1: When the mobile switching center 105 receives the IAM message, it activates the call control program (call control program **a**). A program being in a running state is hereinafter referred to as a 'process'. For example, a call control program **a** being in a running state is called a call control process **a**.

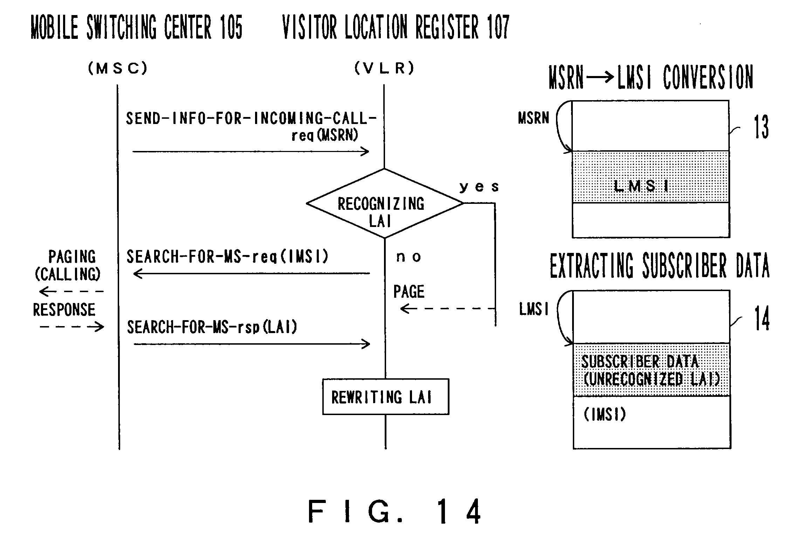

The mobile switching center 105 transfers the SEND-INFO-FOR-INCOMING-CALL request message to the visitor location register 107. The mobile station roaming number (MSRN) of the mobile station 101 is set in this message. Described below by referring to FIG. 14 are the operations of the visitor location register 107 when the SEND-INFO-FOR-INCOMING-CALL request message is received.

The visitor location register 107 retrieves the mobile station roaming number (MSRN) of the mobile station 101 from the SEND-INFO-FOR-INCOMING-CALL request message, accesses the entry table 13 using the mobile station roaming number (MSRN), and obtains the local mobile station ID (LMSI) of the mobile station 101. Then, the visitor location register 107 accesses the subscriber data table 14 using the local mobile station ID (LMSI) of the mobile station 101 as a key and checks the subscriber data of the mobile station 101.

If the location area identification (LAI) of the mobile station 101 is stored, the mobile station 101 is called in the paging procedure according to the location area identification (LAI). Since the paging procedure was described by referring to FIG. 1 or 3, the description is omitted here.

Described below is the case where the location area identification (LAI) of the mobile station 101 is not stored in the subscriber data table 14. In this case, the visitor location register 107 retrieves the international mobile station identity (IMSI) from the subscriber data table 14, and sets the international mobile station identity (IMSI) in the SEARCH-FOR-MS request message and transfers the message to the mobile switching center 105. That is, the mobile station 101 is called in the search-for-mobile-station service procedure using the international mobile station identity (IMSI) of the mobile station 101.

Procedure 2: Back in FIG. 12, call control process a receives the SEARCH-FOR-MS request message. Call control process a enters the number identifying itself (call number = call number **a**) in a call number retrieval table 15 using as a key the international mobile station identity (IMSI) of the mobile station 101 set in the SEARCH-FOR-MS request message. Afterwards, call control process a can be called by searching the call number retrieval table 15 using as a key the international mobile station identity (IMSI) of the mobile station 101.

Procedure 3: Call control process a follows the search-for-mobile-station service procedure on the mobile station 101. That is, the mobile switching center 105 follows the paging procedure using the international mobile station identity (IMSI) on the mobile station 101 through all subordinate base station controllers 104. In FIG. 12, two base station controllers (BSCa, BSCb) are provided under control of the mobile switching center 105.

The mobile station 101 holds a fixedly assigned international mobile station identity (IMSI), and also holds a temporary mobile station identity (TMSI) previously assigned by the mobile switching center 105.

Procedure 4: The mobile station 101 answers the paging from the mobile switching center 105. In the present embodiment, the mobile station 101 is located in the area managed by the base station controller (BSCa) 104. The base station controller (BSCa) 104 transfers a complete-layer-3-information message to the mobile switching center 105 as an answer to the paging. When the mobile switching center 105 receives the paging answer from the mobile station 101, it activates protocol program **a**. A protocol program controls the communications to a mobile station according to a predetermined communications protocol.

Procedure 5: Protocol process a (protocol program **a** being in a running state) retrieves an identification number of the mobile station 101 from the received complete-layer-3-information message, and searches the call number retrieval table 15 using the identification number as a key.

If the mobile station 101 answers using the international mobile station identity (IMSI) the paging released using the international mobile station identity (IMSI), then protocol process a can retrieve a call number **a** from the call number retrieval table 15. Therefore, in this case, the mobile station 101 can be linked to call control program **a**, thereby connecting the source terminal to the mobile station 101.

If the mobile station 101 answers using the temporary mobile station identity (TMSI) the paging released using the international mobile station identity (IMSI) as shown in FIG. 12 (mobile identity = TMSI), then protocol process a searches the call number retrieval table 15 using as a key the temporary mobile station identity (TMSI) of the mobile station 101. However, since the call number a is stored using the international mobile station identity (IMSI) of the mobile station 101 as a key, the protocol process **a** cannot retrieve the call number **a**. That is, the mobile station 101 cannot be linked to protocol process **a**.

Procedure 6: If the mobile station 101 cannot be linked to protocol process **a** in procedure 5, then protocol process **a** newly activates a call control program (hereinafter referred to as a call control process **b**). Call control process **b** receives a complete-layer-3-information message from protocol process **a**. This message, which is received from the mobile station 101, is a response to the paging in procedure 3. Therefore, the mobile station 101 is connected to call control process **b** (call control process **b** being in a running state). Call control process **b** holds the complete-layer-3-information message.

Procedure 7: Call control process **b** contains a command inquiring the terminal sending the complete-layer-3-information message of the international mobile station identity (IMSI). That is to say, the call control process **b** inquires the mobile station 101 of the international mobile station identity (IMSI).

Procedure 8: Protocol process a transfers an identity-request message to the mobile station 101 through the base station controller (BSCa) 104 in response to the inquiry received from call control process **b**. The identity-request message is used in requesting for the international mobile station identity (IMSI) and contains the "identity type = IMSI" as a type of identification number. The procedure of inquiring a mobile station of the identification number is defined in 9. 2. 10 in the GSM Standard 04. 08 (version 4.7.0). The type of identification number is defined in 10. 5. 3. 4 in the GSM Standard 04. 08 (version 4.7.0).

Procedure 9: When the mobile station 101 receives an inquiry described in procedure 8, it sends by wireless its own international mobile station identity (IMSI) as a response to the inquiry. The base station controller (BSCa) 104 transfers the international mobile station identity (IMSI) received from the mobile station 101 to protocol process **a** as an identity-response message. The location area identification (LAI) of the mobile station 101 as well as the international mobile station identity (IMSI) of the mobile station 101 is set in the above described message.

Procedure 10: Protocol process **a** passes the identity-response message received from the base station controller (BSCa) 104 to call control process **b**.

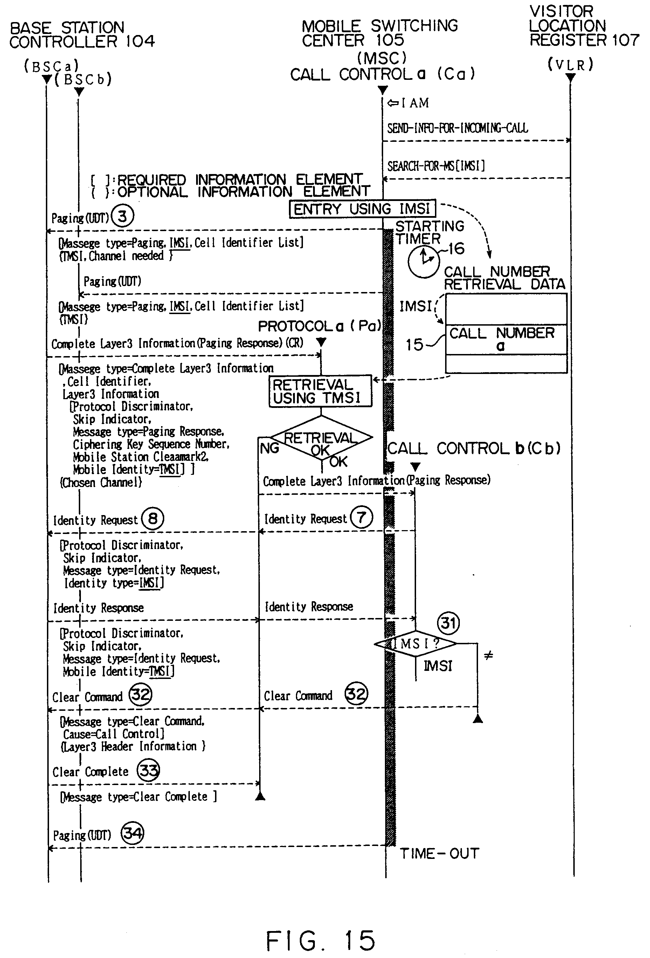

Procedure 11: Call control process **b** checks whether or not the identification number set in the identity-response message is the international mobile station identity (IMSI). In this example, it is assumed that the mobile station 101 has successfully sent its international mobile station identity (IMSI). Unless the mobile station 101 has successfully sent its international mobile station identity (IMSI), refer to the later description by referring to FIG. 15. If call control process **b** determines that the received identification number is the international mobile station identity (IMSI), then it retrieves the complete-layer-3-information message held in procedure 6, rewrites the identification number of the mobile station 101 from the temporary mobile station identity (TMSI) to the international mobile station identity (IMSI), and passes the message to protocol process **a**. Then, call control process **b** is deleted.

Procedure 12: Protocol process **a** searches the call number retrieval table 15 using the international mobile station identity (IMSI) of the mobile station 101 as a key.

Procedure 13: When protocol process **a** retrieves the call number **a** from the call number retrieval table 15, it passes to call control process **a** the complete-layer-3-information message received in procedure 11 as a response to the paging in procedure 3. Thus, the paging response by the mobile station 101 is received by call control process **a**, and the mobile station 101 is linked to call control process **a**. That is, the source terminal is connected to the mobile station 101.

Procedure 14: When call control process a receives a paging response, it sends a SEARCH-FOR-MS response message to the visitor location register 107 to inform that the calling process has been successfully performed in the search-for-mobile-station service procedure.

Procedure 15: If the received SEARCH-FOR-MS response message contains the location area identification (LAI) of the mobile station 101, the visitor location register 107 writes (or updates) the location area identification (LAI) to the area assigned to the mobile station 101 on the subscriber data table 14 as shown in FIG. 14.

To assign a new temporary mobile station identity (TMSI) to the mobile station 101, the visitor location register 107 hunts a currently unused temporary mobile station identity (TMSI), sets the temporary mobile station identity (TMSI) in a FORWARD-NEW-TMSI message, and sends the message to call control process **a**.

Procedure 16: When call control process **a** receives a FORWARD-NEW-TMSI message, a TMSI reallocation command message is passed to protocol process **a**. The temporary mobile station identity (TMSI) hunted in procedure 15 is set in the TMSI reallocation command message.

Procedure 17: When protocol process a receives the TMSI reallocation command message, it transfers the message to the mobile station 101 through the base station controller (BSCa) 104.

Procedure 18: When the mobile station 101 updates the temporary mobile station identity (TMSI) according to the TMSI reallocation command message, it transfers a TMSI reallocation complete message to the mobile switching center 105 through the base station controller (BSCa) 104.

Procedure 19: Protocol process **a** passes the received TMSI reallocation complete message to call control process **a**.

Procedure 20: Call control process a transfers a FORWARD-NEW-TMSI-ACKNOWLEDGE message to the visitor location register 107 to inform that the mobile station has successfully completed the reassignment of the TMSI.

In procedures 1 through 20 shown in FIGs. 12 and 13, if a mobile station responds using the temporary mobile station identity (TMSI) when the mobile station is called using the international mobile station identity (IMSI) in the search-for-mobile-station service procedure, then a call control program is generated (activated) in response to the answer from the mobile station. The call control program has the function of inquiring the mobile station of the international mobile station identity (IMSI). Thus, the system of inquiring a mobile station of an identification number using the call control program (call control process) is referred to as a call control system.

FIG. 15 shows the sequence of the operations when the mobile station does not correctly respond to the inquiry about the international mobile station identity (IMSI) in the call control system shown in FIGs. 12 and 13.

Like the sequence shown in FIG. 12, call control process **a** in the mobile switching center 105 inquires the mobile station 101 of the international mobile station identity (IMSI) in procedures 7 and 8. In response to the inquiry, the mobile station 101 sends an identification number other than the international mobile station identity (IMSI). In the example shown in FIG. 15, the mobile station 101 sends the temporary mobile station identity (TMSI) although the international mobile station identity (IMSI) is requested. In this case, control is passed to the following procedures 31 through 34.

Procedure 31: When call control process **b** receives a response message from the mobile station 101, it checks whether or not the identification number set in the message refers to the number system of the international mobile station identity (IMSI). In this example, it recognizes that the identification number is not the international mobile station identity (IMSI).

Procedure 32: Call control process **b** sends a clear command message to clear the wireless resources (connection to the mobile station 101).

Procedure 33: When the base station controller (BSCa) 104 receives the message, it clears all wireless resources for the mobile station 101. Then, the base station controller (BSCa) 104 sends a clear complete message to the mobile switching center 105.

Procedure 34: If call control process **a** transmits a paging message to the base station controller 104 in procedure 3 although it is omitted in the sequence shown in FIGs. 12 and 13, then a timer 16 starts counting time. The timer 16 is reset when call control process a receives a paging response from a mobile station.

However, since the identification number received from the mobile station 101 is not the international mobile station identity (IMSI) in the example shown in FIG. 15, a call number **a** cannot be retrieved from the call number retrieval table 15. That is, call control process **a** cannot receive the paging response from the mobile station 101 and the timer cannot be reset. Therefore, the timer 16 times out. When the timer 16 times out, call control process **a** calls the mobile station 101 again by sending the paging message as in procedure 3.

Thus, if a mobile station does not correctly respond to the inquiry about the international mobile station identity (IMSI), then the process of calling the mobile station is performed again. However, if the mobile station does not correctly respond after a predetermined frequency of the process, then a predetermined error process is performed.

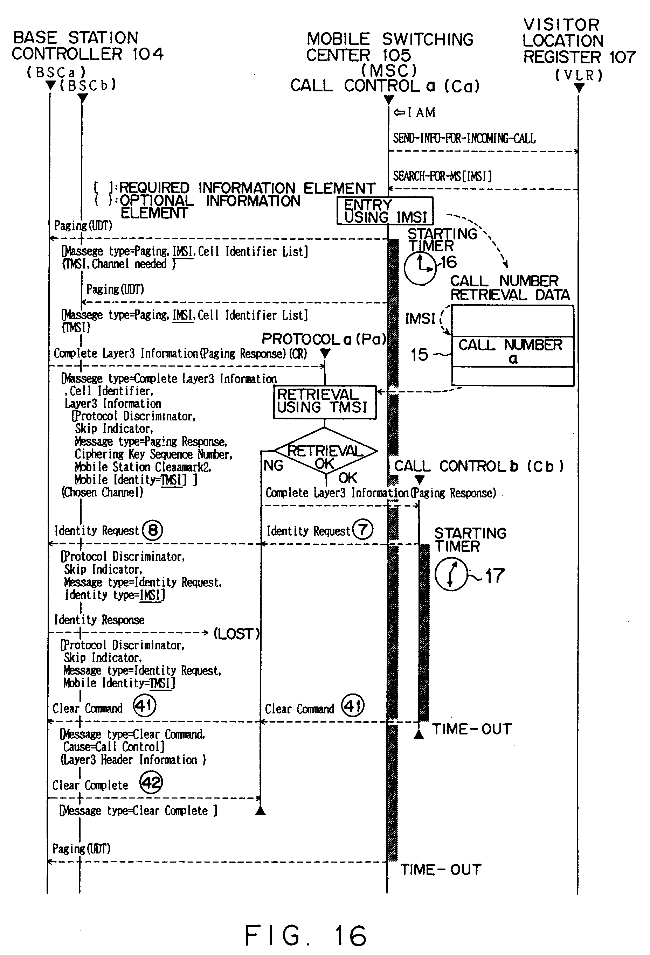

FIG. 16 shows the sequence of the operations when a mobile switching center cannot receive a response to an inquiry from a mobile station in the call control system.

As in the sequence shown in FIG. 12, call control process **a** inquires the mobile station 101 of the international mobile station identity (IMSI) in procedures 7 and 8. However, the mobile switching center 105 cannot receive a response from the mobile station 101. FIG. 16 shows an example that the response from the mobile station 101 has been lost during the transfer. The mobile switching center 105 may not receive a response from the mobile station 101 because, for example, the mobile station 101 sends back no answers. If the mobile switching center 105 does not receive a response from the mobile station 101, control is passed to the following procedures 41 and 42.

Procedure 41: If a message is transmitted to inquire the mobile station 101 of the international mobile station identity (IMSI) in procedure 7 although it is omitted in the sequence shown in FIGs. 12 and 13, a timer 17 starts counting time. The timer 17 is reset when call control process **b** receives a response to the inquiry.

However, in the example shown in FIG. 16, call control process **b** cannot receive a response to the inquiry about the international mobile station identity (IMSI). Therefore, the timer 17 is not reset, but times out. When the timer 17 times out, call control process **b** transmits the clear command message to clear the wireless resources (connection to the mobile station 101) as in procedure 32.

Procedure 42: When the base station controller (BSCa) 104 receives the message, it clears all wireless resources relating to the mobile station 101. Then, the base station controller (BSCa) 104 transmits a clear complete message to the mobile switching center 105.

If no international mobile station identity (IMSI) is received from the mobile station after a predetermined time has passed since the inquiry from the mobile switching center as shown in FIG. 15 or 16, then the wireless resources are cleared, thereby avoiding the wasteful occupation of bands.

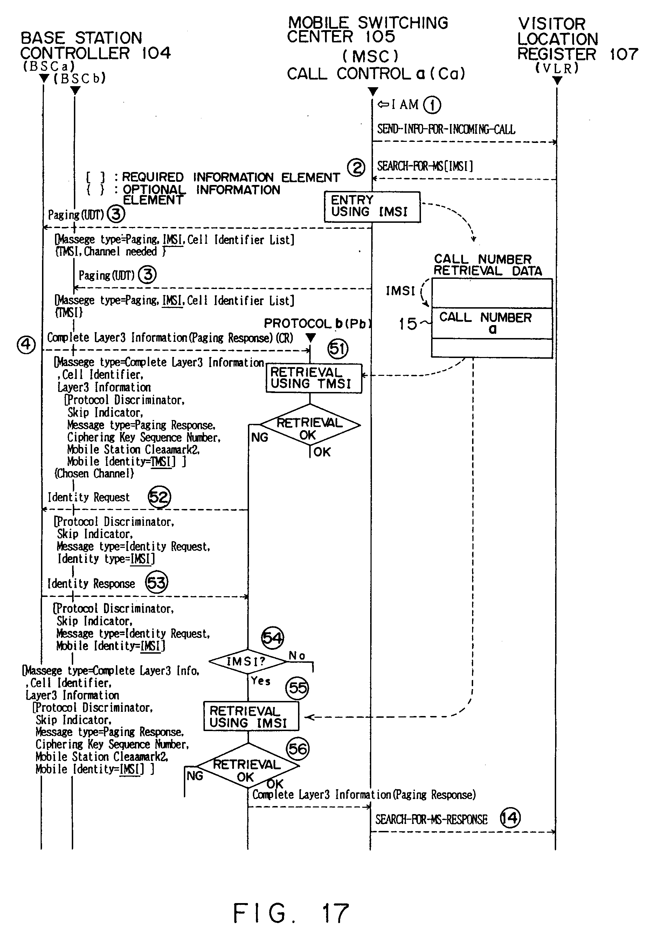

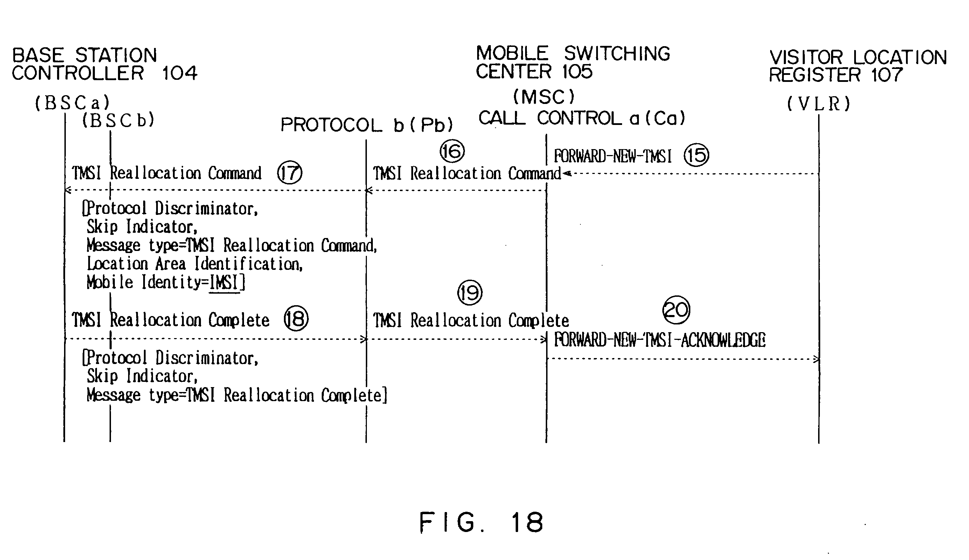

Described below is the protocol process system. In the call control system described by referring to FIGs. 12 and 13, a call control program is generated (activated) to process the response from a mobile station, and the call control program (call control process) inquires the mobile station of the international mobile station identity (IMSI). In the protocol process system, a protocol program has the function of inquiring a mobile station of the international mobile station identity (IMSI). The protocol process system is described below by referring to FIGs. 17 and 18.

Procedures 1 through 4: These procedures are the same as those shown in FIG. 12. However, protocol program **a** is activated in the call control system whereas protocol process **b** is activated in the protocol process system. Unlike protocol program **a**, protocol process **b** has the function of inquiring the mobile station of the international mobile station identity (IMSI). Protocol process **b** does not have the function of generating or activating a call control program in answering a response from the mobile station.

Procedure 51: Protocol process **b** retrieves the identification number of the mobile station 101 from the received complete-layer-3-information message, and searches the call number retrieval table 15 using the number as a key.

If the mobile station 101 answers using the international mobile station identity (IMSI) the paging released also using the international mobile station identity (IMSI), then protocol process **b** can retrieve the call number **a** from the call number retrieval table 15. Therefore, in this case, the mobile station 101 can be linked to call control process a, thereby connecting the source terminal with the mobile station 101.

If the mobile station 101 answers using the temporary mobile station identity (TMSI) the paging released using the international mobile station identity (IMSI) as shown in FIG. 17 ('mobile identity = TMSI' in FIG. 17), then protocol process **b** searches the call number retrieval table 15 using the temporary mobile station identity (TMSI) as a key. However, since the call number **a** is stored using the international mobile station identity (IMSI) of the mobile station as a key, protocol process **b** cannot retrieve the call number **a**. That is, the mobile station 101 cannot be linked to call control process **a**.

Procedure 52: Protocol process **b** inquires the mobile station 101 of the international mobile station identity (IMSI). That is, protocol process **b** transfers the identity-request message to the mobile station 101 through the base station controller (BSCa) 104. The identity-request message was described by referring to FIG. 12.

Procedure 53: When the mobile station 101 receives an inquiry in procedure 52, it transmits by wireless its own international mobile station identity (IMSI) in response to the inquiry as in procedure 9 shown in FIG. 12. The base station controller (BSCa) 104 transfers to protocol process **b** the international mobile station identity (IMSI) received from the mobile station 101 as an identity-response message.

Procedure 54: Protocol process **b** checks whether or not the identification number of the mobile station 101 set in the identity-response message is an international mobile station identity (IMSI). In this example, it is assumed that the mobile station 101 correctly transmits its international mobile station identity (IMSI).

Procedure 55: Protocol process **b** searches the call number retrieval table 15 using the international mobile station identity (IMSI) of the mobile station 101 as a key.

Procedure 56: When protocol process **b** retrieves the call number **a** from the call number retrieval table 15, it rewrites the identification number of the mobile station 101 in the complete-layer-3-information message received in procedure 4 from the temporary mobile station identity (TMSI) to the international mobile station identity (IMSI). Then, protocol process **b** passes to call control process **a** the complete-layer-3-information message as a response to the paging message in procedure 3. Thus, call control process **a** receives the paging response from the mobile station 101, and the mobile station 101 is linked to call control process **a**. As a result, the source terminal is connected to the mobile station 101.

Since the subsequent procedures are the same as those in the call control system shown in FIGs. 12 and 13, the descriptions are omitted here.

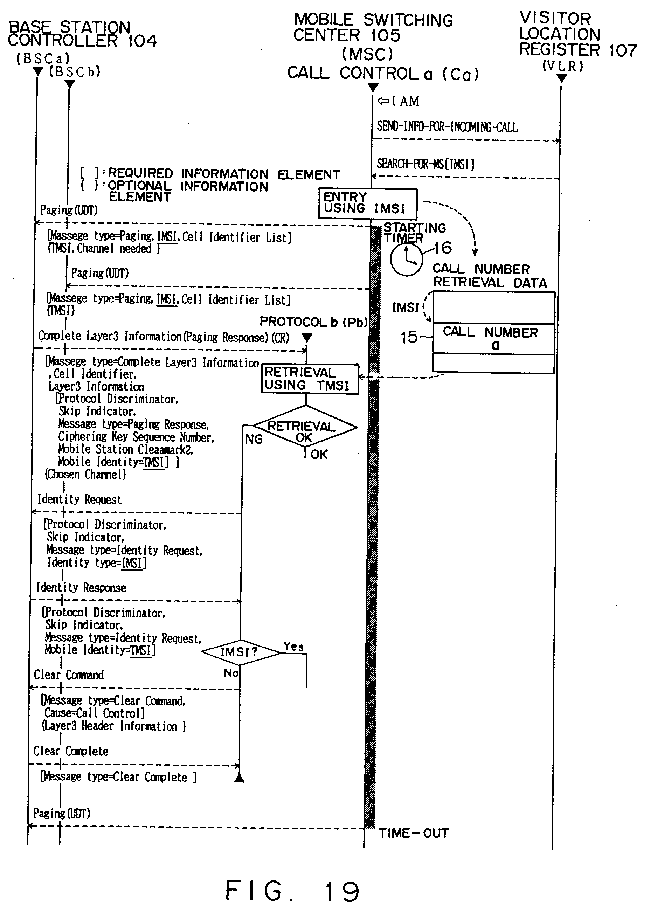

FIG. 19 shows the sequence of the operations when the mobile station does not correctly respond to the inquiry about the international mobile station identity (IMSI) in the protocol process system.

This sequence is basically the same as that of the call control system described by referring to FIG. 15. However, in the protocol process system, the process performed in the call control system by call control process **b** is performed by protocol process **b**. That is, in the protocol process system, protocol process **b** checks the identification number transferred in response to the inquiry about the international mobile station identity (IMSI), and transmits the clear command message.

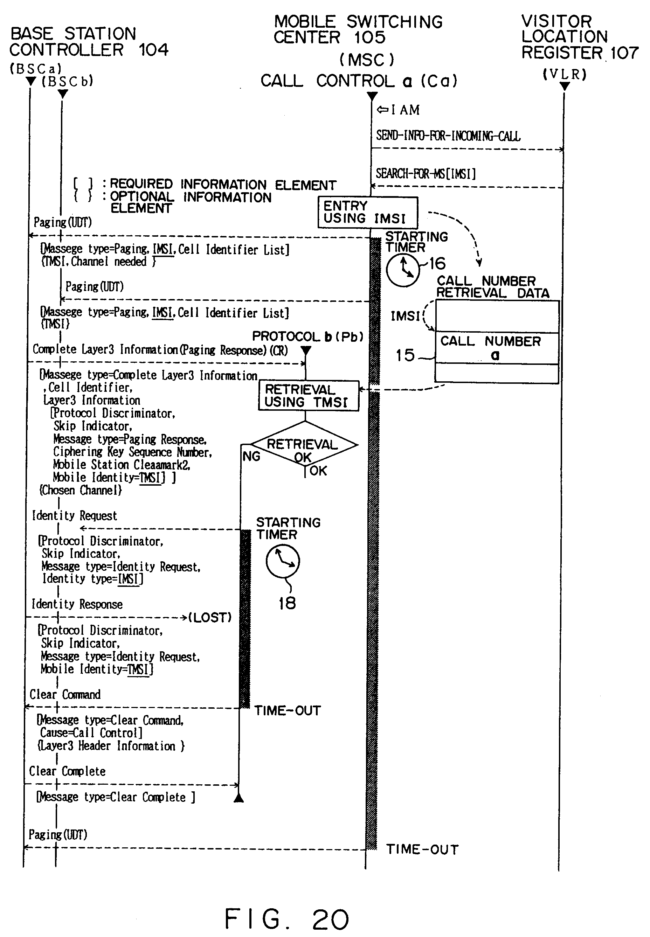

FIG. 20 shows the sequence of the operations performed when a mobile switching center cannot receive from a mobile station a response to an inquiry in the protocol process system.

This sequence is basically the same as that of the call control system described by referring to FIG. 16. However, in the protocol process system, a timer 18 replaces the timer 17. The timer 18 starts counting time when the mobile station 101 is inquired of the international mobile station identity (IMSI), and is reset when protocol process **b** receives the response to the inquiry. When the timer 18 times out, the clear command message is transmitted to clear the wireless resources (connection to the mobile station 101).

Now, the call control system is compares with the protocol process system. The call control system and the protocol process system are embodiments of the present invention, and have the function of inquiring a mobile station of the international mobile station identity (IMSI) when the mobile station answers using the temporary mobile station identity (TMSI) the paging released using the international mobile station identity (IMSI).

In the call control system, the call control program, which is generated in response to the paging response from the mobile station, executes this function. This call control program can be easily generated only by adding the functions in procedures 7, 10, and 11 shown in FIG. 12 to the call control program for controlling a normal call (such as call control program **a**).

In the protocol process system, the above described function is executed by the protocol program. Therefore, the configuration of the protocol program itself is a little complicated, but the protocol process system has the advantage that the processes can be performed at a high speed because, unlike the call control system, information is not exchanged between the call control process and the protocol process (inter-process communications).

Described next is the system of regenerating (collecting) information autonomously stored in the visitor location register.

The visitor location register stores subscriber data for each mobile station as shown in FIG. 11. However, the location area identification (LAI) and temporary mobile station identity (TMSI) of each mobile station are deleted when the visitor location register is restarted (for example, at the recovery from system down). Therefore, if the visitor location register is restarted after the system fails in the register, a mobile station should be called in the search-for-mobile-station service procedure when a request is released to connect a call to the mobile station entered in the visitor location register.

In the following embodiment, a mobile station can be called in the paging procedure when a request to call the mobile station is received even after the system fails in the visitor location register by autonomously regenerating and collecting the information about each mobile station when the visitor location register is restarted.

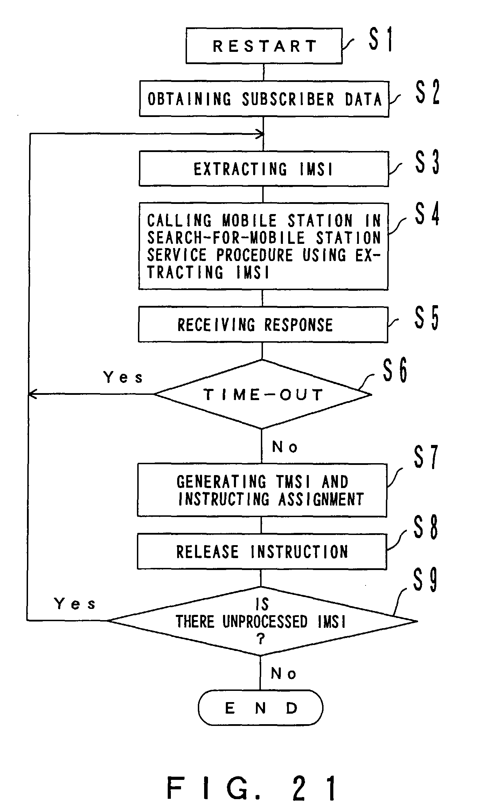

FIG. 21 is a flowchart showing the method of the visitor location register's autonomously regenerating the temporary mobile station identity (TMSI) of each mobile station.

When the visitor location register is restarted in step S1, it reads subscriber data from the home location register and enters the data in the subscriber data table 14 in step S2.

In step S3, an international mobile station identity (IMSI) corresponding to a mobile station is extracted. The international mobile station identity (IMSI) is a number fixedly assigned to each mobile station, and is constantly stored in the home location register. Therefore, the identity is received from the home location register in step S2.

In step S4, the mobile station is called in the search-for-mobile-station service procedure using the international mobile station identity (IMSI). In step S5, an answer is received in response to the call released in the search-for-mobile-station service procedure.

In step S6, it is checked whether or not the response is received due to the timeout in step S5. If it is received due to the timeout, control is returned to step S3 and then passed to the process on the subsequent mobile station. If the response is not transmitted due to the timeout, then it is regarded as a normal response from the mobile station, and control is passed to step S7.

In step S7, an unused temporary mobile station identity (TMSI) is hunted, and an instruction message is transmitted to assign the hunted temporary mobile station identity (TMSI) to the mobile station called in step S4. The temporary mobile station identity (TMSI) is stored on the subscriber data table 14 corresponding to the international mobile station identity (IMSI) extracted in step S3.

In step S8, a clear command message is issued to disconnect a call to the mobile station newly assigned the temporary mobile station identity (TMSI). In step S9, it is checked whether or not the processes in steps S3 through S8 have been performed on all mobile stations, and control is returned to step S3 if there is an unprocessed international mobile station identity (IMSI).

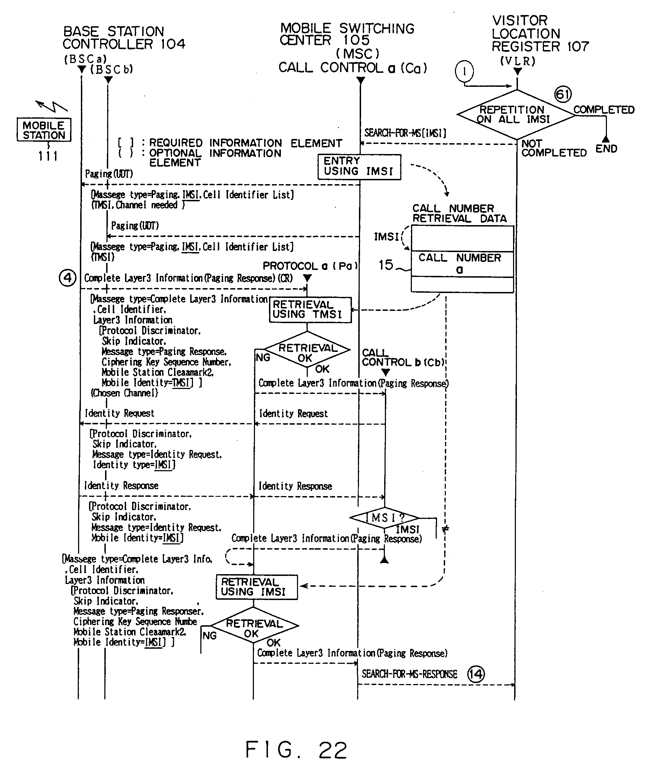

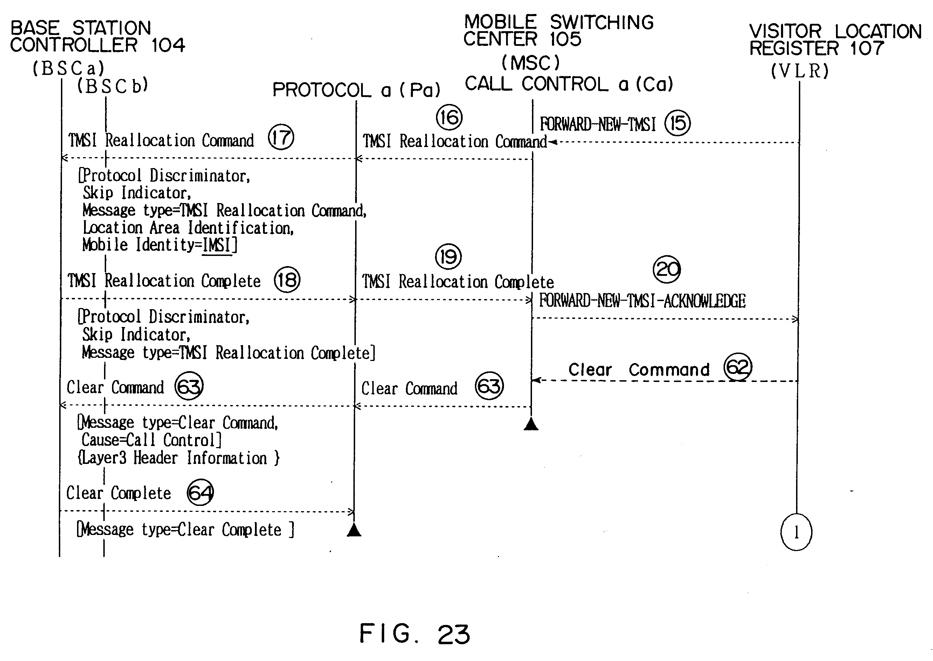

FIGs. 22 and 23 show the sequence of the operations performed when the process of autonomously regenerating the temporary mobile station identity (TMSI) in the visitor location register is applied to the call control system.

Procedure 61: This process corresponds to the step S9 shown in FIG. 21. Therefore, if there is an unprocessed international mobile station identity (IMSI), then the processes in steps S3 and S4 shown in FIG. 21 are performed. That is, the international mobile station identity (IMSI) is extracted and a mobile station assigned the extracted international mobile station identity (IMSI)is called in the search-for-mobile-station service procedure. This called mobile station is hereinafter referred to as a mobile station 111. At this time, the visitor location register 107 transmits the SEARCH-FOR-MS message to the mobile switching center 105. In the SEARCH-FOR-MS message, an international mobile station identity (IMSI) of the mobile station 111 is set as an identification number of a destination mobile station.

The processes after the mobile switching center 105 has received the SEARCH-FOR-MS response message are performed in the sequence shown in FIGs. 12 and 8. In the procedure 14 shown in FIG. 22, the SEARCH-FOR-MS response message is transferred from the mobile switching center 105 to the visitor location register 107. This procedure corresponds to step S6 shown in FIG. 21.

In the examples shown in FIGs. 22 and 23, call control program **a** (call control process **a**) activated by the call instruction from the visitor location register 107 to the mobile station 111 receives the paging response from the mobile station 111. As a result, the visitor location register 107 is connected to the mobile station 111. Therefore, the SEARCH-FOR-MS response message in procedure 14 is not a response due to the timeout, but is passed to the visitor location register 107 as a normal response. As a result, the process in step S7 shown in FIG. 21 is performed. That is, the visitor location register 107 generates the temporary mobile station identity (TMSI), and assigns the generated temporary mobile station identity (TMSI) to the mobile station 111 in procedures 15 through 20.

In procedure 20, when the visitor location register 107 receives the FORWARD-NEW-TMSI-ACKNOWLEDGE message, the following procedures 62 through 64 are followed.

Procedure 62: The visitor location register 107 transmits a message instructing to clear connection to the mobile switching center 105 so that the connection to the mobile station 111 can be cleared. This process corresponds to step S8 shown in FIG. 21.

Procedure 63: The mobile switching center 105 transmits the clear command message to the base station controller 104 to clear the connection to the mobile station 111.

Procedure 64: The base station controller 104 transmits the clear complete message to the mobile switching center 105 to inform that all resources relating to the mobile station 111 have been cleared.

In the above described procedure, the temporary mobile station identity (TMSI) is assigned to one mobile station. When the location area identification (LAI) of the mobile station is set in the paging response in procedure 4, the location area identification (LAI) is stored in the visitor location register 107.

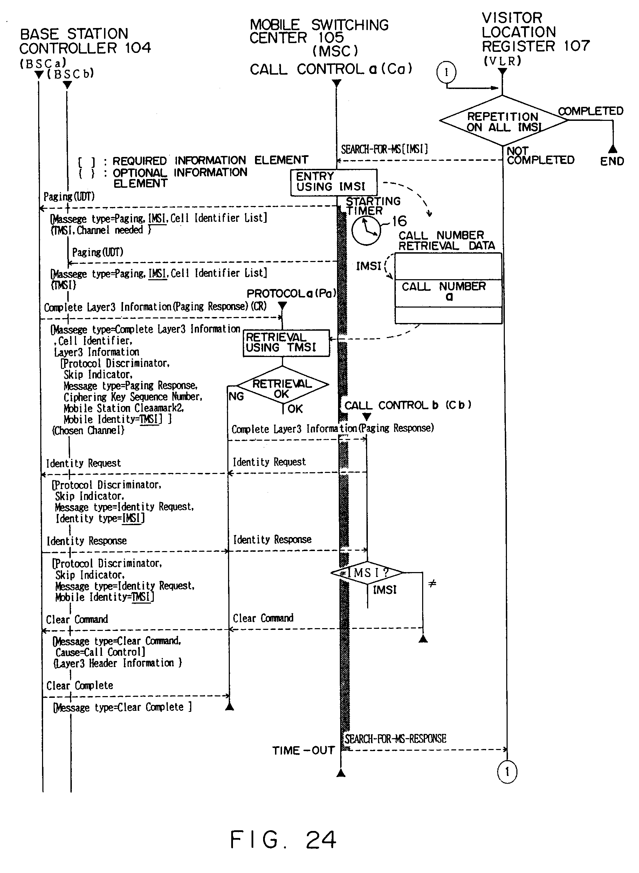

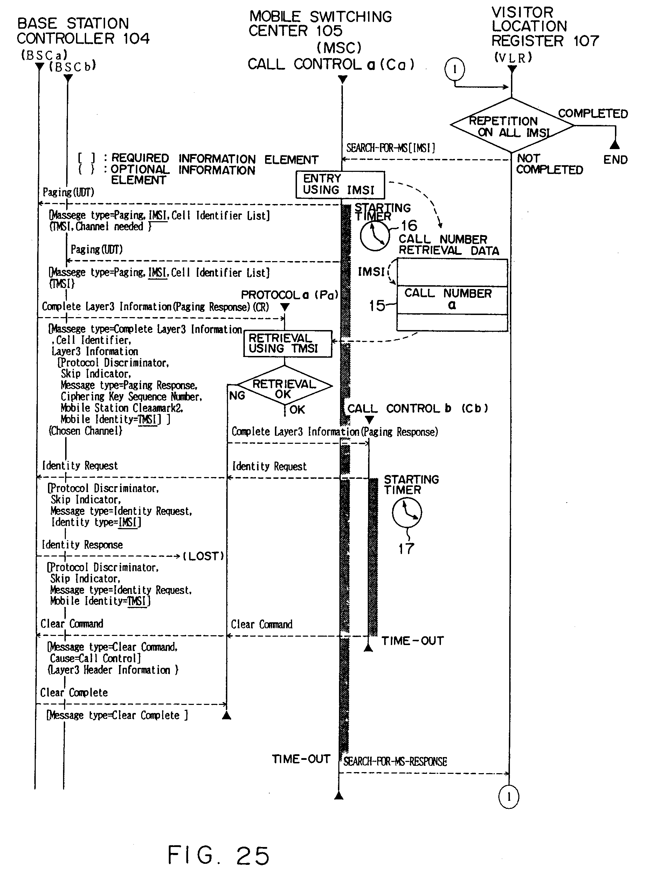

FIGs. 24 and 25 show the sequence of the operations performed when the process of autonomously regenerating the temporary mobile station identity (TMSI) in the visitor location register is applied to the call control system. FIGs. 24 and 25 show the case where the abnormal conditions respectively shown in FIGs. 15 and 16 occur.

Unless call control process a cannot receive the paging response from the mobile station 111 as shown in FIG. 24 or 25, the timer 16 times out. In this case, the mobile switching center 105 transfers the SEARCH-FOR-MS response message to the visitor location register 107 to inform that the call fails in the search-for-MS procedure. Since the message is generated by the timeout of the timer 16, this information is set in the message.

When the visitor location register 107 receives this message, it recognizes in the determination in step S6 shown in FIG. 21 that the response has been made due to the timeout. Then, the subsequent mobile station is processed without assigning the temporary mobile station identity (TMSI).

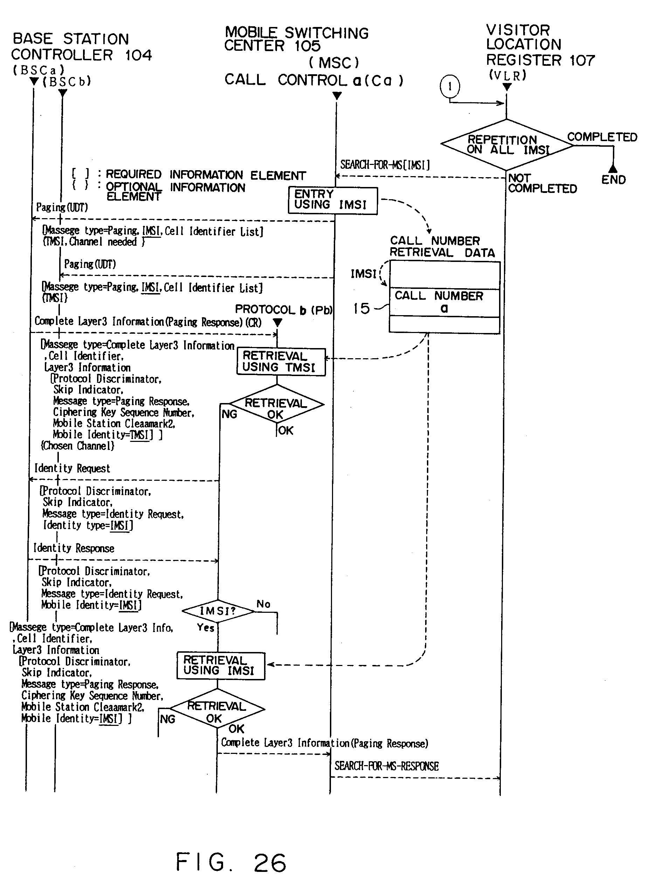

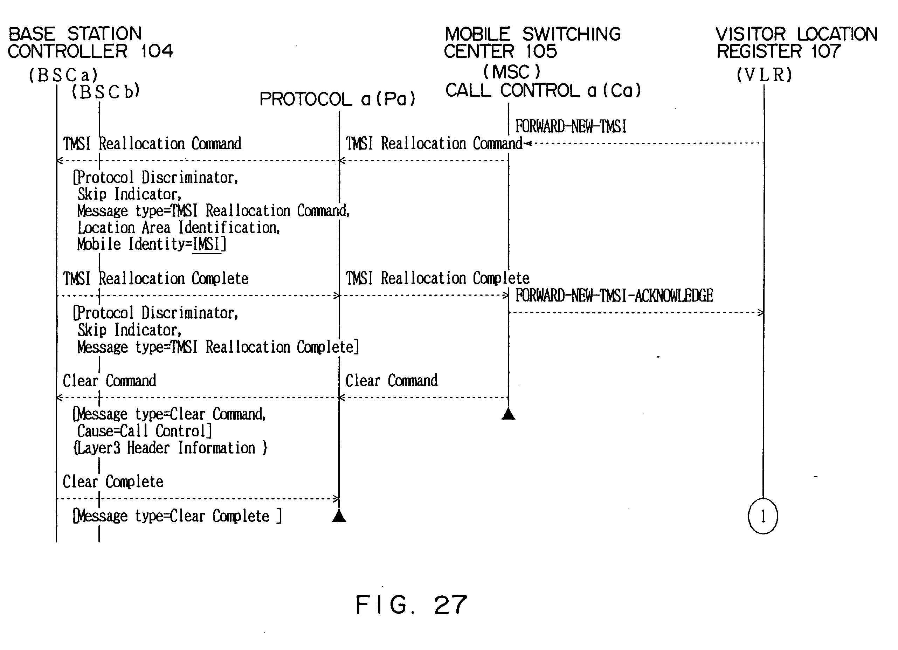

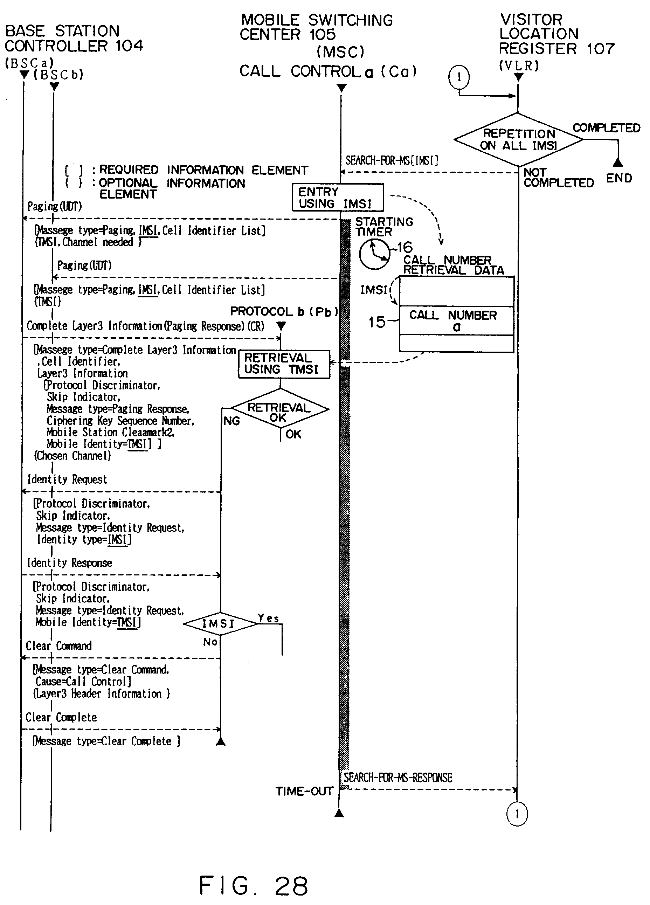

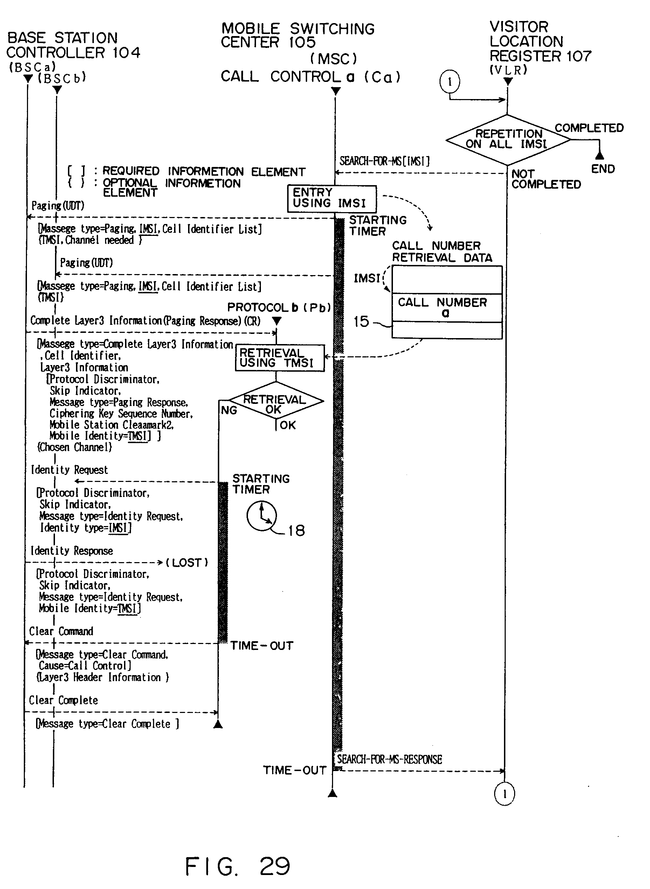

FIG. 26 through 29 show the sequence of the operations performed when the process of autonomously regenerating the temporary mobile station identity (TMSI) in the visitor location register is applied to the protocol process system, and respectively corresponds to the FIG. 22 through 25. Since each procedure of FIGs. 26 through 29 can be realized by combining the above described procedures, the descriptions are omitted here.

In FIGs. 22 or 26, the mobile station responds using the temporary mobile station identity (TMSI) to the call released using the international mobile station identity (IMSI). However, if the mobile station responds using the international mobile station identity (IMSI) to the call released using the international mobile station identity (IMSI), then a link is established to the mobile station. Therefore, the mobile switching center passes the SEARCH-FOR-MS response message to the visitor location register as a normal response, thereby immediately assigning a new temporary mobile station identity (TMSI) to the mobile station.

In the above described embodiment, the visitor location register autonomously regenerates the temporary mobile station identity (TMSI) when it is restarted. However, the present invention is not limited to the operation of the visitor location register when it is restarted. That is, if the subscriber data is periodically retrieved from the visitor location register, and there is a mobile station which stores no temporary mobile station identity (TMSI) or location area identification (LAI), then the processes in steps S4 through S8 shown in FIG. 21 are performed on the mobile station to assign it the temporary mobile station identity (TMSI).

The above described embodiment relates to a GSM system. However, the present invention is not limited to this application, but can be applied to the call connection system in the mobile communications system in which the identification number in the first and second number systems is assigned to each mobile station.

The present invention has the following effects.

When a mobile station responds using the temporary mobile station identity (TMSI) to the paging released using the international mobile station identity (IMSI), the switching center inquires the mobile station of the international mobile station identity (IMSI), thereby establishing a connection between the source terminal and the destination mobile station through the international mobile station identity (IMSI).

If the visitor location register stores no temporary mobile station identity (TMSI) of the mobile station, then the temporary mobile station identity (TMSI) of the mobile station is autonomously generated in the switching network and the newly generated temporary mobile station identity (TMSI) is re-entered in the mobile station. Therefore, the subscriber data can automatically recover from the system failure which deletes the subscriber data stored in the visitor location register. Thus, the calling to the mobile station can be smoothly connected.

## Claims

1. A call connection system in a mobile communications system for assigning an identification number in a first number system and an identification number in a second number system to each mobile station, comprising:
calling means (1) for calling a destination mobile station using an identification number in the first number system assigned to the destination mobile station;
inquiring means (2) for inquiring the destination mobile station of the identification number in the first number system when a response released using an identification number in the second number system is received from the destination mobile station;
receiving means (3) for receiving in response to the inquiry the identification number transferred from the destination mobile station; and
connecting means (4) for connecting a source terminal to the destination mobile station when the identification number in the first number system used by said calling means matches the identification number received by said receiving means.

2. The call connection system according to claim 1, further comprising:
assigning means for newly assigning an identification number in the second number system to the destination mobile station when the identification number in the first number system used by said calling means matches the identification number received by said receiving means.

3. The call connection system according to claim 1, wherein
said inquiring means comprises:
a protocol unit for receiving from the destination mobile station a response to a call; and
a dummy call control unit, generated by said protocol unit when an identification number set in the response received by said protocol unit is an identification number in the second number system, for inquiring the destination mobile station of the identification number in the first number system.

4. The call connection system according to claim 1, wherein
said inquiring means is designed by adding a function of inquiring the destination mobile station of the identification number in the first number system to a protocol unit for transmitting information to and from a mobile station.

5. The call connection system according to claim 1, further comprising:
first clearing means for clearing a link to the destination mobile station when the identification number in the first number system used by said calling means does not match the identification number received by said receiving means.

6. The call control system according to claim 1, further comprising:
a first timer (16) for starting counting time when said calling means calls the destination mobile station, and for being reset when the identification number in the first number system used by said calling means is received by said receiving means, wherein
said calling means calls again the destination mobile station when said first timer counts a predetermined time.

7. The call control system according to claim 1, further comprising:
a second timer (17) for starting counting time when said inquiring means inquires the destination mobile station of the identification number in the first number system, and for being reset when said receiving means receives a response to the inquiry from the destination mobile station; and
second clearing means for clearing a link to the destination mobile station when said second timer counts a predetermined time.

8. A mobile switching center in a GSM, comprising:
calling means (1) for calling a destination mobile station using an international mobile station identity assigned to the destination mobile station;
inquiring means (2) for inquiring the destination mobile station of the international mobile station identity when a response is received from the destination mobile station using a temporary mobile station identity; and
connecting means (4) for connecting a source terminal to the destination mobile station when the international mobile station identity used by said calling means matches an identification number transferred in response to the inquiry from the destination mobile station.

9. An identification number regenerating system for use in a mobile communications system for assigning identification numbers in a first number system and a second number system to each mobile station, comprising:
storage means for storing an identification number in the first number system of each mobile station corresponding to an identification number in the second number system;
calling means for retrieving the identification number in the first number system from said storage means, and calling a mobile station using the retrieved identification number;
assigning means for receiving a response from the mobile station called by said calling means, and newly assigning to the mobile station an identification number in the second number system; and
updating means for storing, corresponding to the identification number in the first number system retrieved by said calling means, the identification number in the second number system assigned to the mobile station by said assigning means.

10. A method of connecting a call in a mobile communications system for assigning an identification number in a first number system and an identification number in a second number system to each mobile station, comprising the steps of:
calling a destination mobile station using an identification number in the first number system assigned to the destination mobile station;
inquiring the destination mobile station of the identification number in the first number system when a response released using an identification number in the second number system is received from the destination mobile station;
receiving in response to the inquiry the identification number transferred from the destination mobile station; and
connecting a source terminal to the destination mobile station when the identification number in the first number system used in calling the destination mobile station matches the identification number transferred from the destination mobile station.

11. A method of connecting a call in a mobile communications system for assigning to each mobile station an identification number in a first number system and an identification number in a second number system, comprising the steps of:
receiving a connection request from a source terminal to a mobile station;
calling a destination mobile station using an identification number in the first number system assigned to the destination mobile station;
storing the connection request using as a key the identification number in the first number system assigned to the destination mobile station;
inquiring the destination mobile station of the identification number in the first number system when a response is received from the destination mobile station using an identification number in the second number system;
receiving the identification number transferred from the destination mobile station in response to the inquiry; and
retrieving the stored connection request using as a key the identification number transferred from the destination mobile station, and connecting the source terminal to the destination mobile station according to the connection request.
